# EUROPEAN PATENT APPLICATION

(11) **EP 4 579 417 A1**
(43) Date of publication of application: **02.07.2025**
(21) Application number: 23870829.1
(22) Date of filing: 26.09.2023
(51) Int. Cl.: G06F 3/0484, G06F 3/04817

(54) **WINDOW SWITCHING METHOD AND ELECTRONIC DEVICE**

(30) Priority: 30.09.2022 CN 202211217538
(71) Applicant: Huawei Technologies Co., Ltd., Shenzhen, Guangdong 518129 (CN)
(72) Inventor: XU, Jie, Shenzhen, Guangdong 518129 (CN); HU, Liang, Shenzhen, Guangdong 518129 (CN)
(74) Representative: Epping - Hermann - Fischer
(86) International application number: PCT/CN2023/121614
(87) International publication number: WO 2024/067601

(57) **Abstract**

Embodiments of this application provide a window switching method and an electronic device. The method may be applied to a first electronic device and a second electronic device. The first electronic device and the second electronic device have a screen projection relationship. When it is determined that the first electronic device or the second electronic device has switched from a first state to a second state, the first electronic device may display a first display interface and suspend screen projection to the second electronic device. The second electronic device displays a first icon, where the first icon indicates that a display of the first electronic device serves as an extension screen of the second electronic device. In this technical solution, when it is detected that a status of an electronic device changes, a display of a projected-from electronic device may serve as an extension screen of another projected-to electronic device, and a screen extension icon may be displayed on the another electronic device, without specifically displaying a screen projection window. A user does not need to perform a manual switching operation, so that user experience can be improved.

## Description

This application claims priority to Chinese Patent Application No. 202211217538.9, filed with the China National Intellectual Property Administration on September 30, 2022 and entitled "WINDOW SWITCHING METHOD AND ELECTRONIC DEVICE", which is incorporated herein by reference in its entirety.

### TECHNICAL FIELD

Embodiments of this application relate to the field of electronic technologies, and more specifically, to a window switching method and an electronic device.

### BACKGROUND

When using an electronic device, a user usually needs to display a display interface of one electronic device on another electronic device. For example, a screen of a mobile phone is projected to a tablet computer, and a display interface of the mobile phone may be displayed on the tablet computer. In this case, the mobile phone serves as a projected-from device, and the tablet computer serves as a projected-to device.

However, a screen projection window including the mobile phone may block some content displayed on the tablet computer. Therefore, the user may perform an operation to display the screen projection window on the tablet computer in a minimized form, and redisplay the screen projection window when needed, without affecting use of the tablet computer by the user. However, the user needs to perform frequent operations for switching the screen projection window. This affects user experience.

### SUMMARY

Embodiments of this application provide a window switching method and an electronic device, to achieve the following objective: When it is detected that a status of an electronic device changes, a display of a projected-from electronic device may serve as an extension screen of another projected-to electronic device, and the another projected-to electronic device may display a screen extension icon, without specifically displaying a screen projection window, to omit some operations of a user, so that user experience can be improved.

According to a first aspect, a window switching method is provided. The method is applied to a first electronic device. The first electronic device is in a scenario of performing screen projection to a second electronic device. A first display interface displayed on the second electronic device is an interface projected by the first electronic device to the second electronic device. The method includes: The first electronic device determines that the first electronic device or the second electronic device has switched from a first state to a second state, where an electronic device whose status is not switched is in the second state. The first electronic device suspends screen projection to the second electronic device, and the first electronic device displays the first display interface; or the first electronic device displays the first display interface based on first screen projection data received from the second electronic device.

It should be understood that the first data may be data projected by the first electronic device to the second electronic device. The first display interface may be a display interface of a screen projection window.

In this embodiment of this application, after the first electronic device performs screen projection to the second electronic device, when the first electronic device determines that the first electronic device or the second electronic device has switched from the first state to the second state (for example, from a normal state to a holder state), an electronic device whose status is not switched is also in the second state. In this case, the first electronic device may automatically suspend screen projection to the second electronic device and display the first display interface projected to the second electronic device. To be specific, a display of the first electronic device may visually serve as an extension screen of the second electronic device. In this technical solution, screen projection may be automatically suspended when a status of an electronic device changes, to avoid a manual operation of a user. In addition, the display of the first electronic device may serve as an extension screen of the second electronic device, so that wider visual effect can be provided for the user, and user experience is improved. Further, the first electronic device suspends screen projection, so that power consumption and bandwidth can be reduced.

In this embodiment of this application, when a status of an electronic device changes, the first electronic device may continue to perform screen projection to the second electronic device, receive the first data sent by the second electronic device, and display the first display interface based on the first data, so that the screen projection window can be conveniently switched onto the first electronic device for display. In this way, when the screen projection window is switched back onto the second electronic device, screen projection data does not need to be reloaded because screen projection is not interrupted, so that a delay can be reduced.

With reference to the first aspect, in an implementation of the first aspect, before the first electronic device displays the first display interface and suspends screen projection to the second electronic device, the method further includes: determining whether the display of the first electronic device is turned on; and turning on the display if determining that the display is not turned on.

In this embodiment of this application, after performing screen projection to the second electronic device, the first electronic device may turn off a screen to reduce power consumption. When detecting that a status of the first electronic device or the second electronic device changes, the first electronic device may first determine whether the display of the first electronic device is turned on, and if the display is not turned on, turn on the display to display the first display interface. In this technical solution, a display may be turned on when needed, so that power consumption of an electronic device can be reduced.

With reference to the first aspect, in an implementation of the first aspect, if the first electronic device determines that the first electronic device has switched from the first state to the second state, the method further includes: sending first indication information to the second electronic device, where the first indication information indicates that the first electronic device has switched from the first state to the second state.

In this embodiment of this application, when the first electronic device determines that a status of the first electronic device changes, the first electronic device sends indication information for the status change to the second electronic device, so that the second electronic device can perform a switching policy.

With reference to the first aspect, in an implementation of the first aspect, that the first electronic device determines that the second electronic device has switched from a first state to a second state includes: receiving second indication information sent by the second electronic device; and when the second indication information indicates that the second electronic device has switched from the first state to the second state, determining that the second electronic device has switched from the first state to the second state.

In this embodiment of this application, the first electronic device may further receive indication information that is sent by the second electronic device and that indicates that a status of the second electronic device changes, to determine that the status of the second electronic device changes, so that the first electronic device can perform a window switching policy.

With reference to the first aspect, in an implementation of the first aspect, the first state and/or the second state are/is a physical form of an electronic device.

For example, that the first state or the second state is a physical form of an electronic device may be understood as that the first state or the second state is a posture of the electronic device. For example, the electronic device is placed on a desktop, or is placed on an object at a specific angle, or is held in a hand of the user for use.

With reference to the first aspect, in an implementation of the first aspect, the second state is the holder state, and the holder state indicates that the electronic device is in a stable state, or the holder state is a state in which the electronic device is placed on a holder; and the first state is the normal state, and the normal state indicates that the electronic device is in an unstable state, or the normal state is a state in which the electronic device is not placed on the holder.

It can be understood that the holder state may indicate that the electronic device is in a stable state. For example, the electronic device is placed in a fixed posture, or is placed on another object at a specific angle, or the electronic device is in a state of being placed on the holder. The normal state may indicate that the electronic device is in an unstable state. For example, the electronic device is held in a hand of the user for use, and does not have a fixed posture. In this case, a posture of the electronic device is in an unstable state, or the electronic device is in a state of not being placed on the holder.

With reference to the first aspect, in an implementation of the first aspect, in the second state, an angle of the first electronic device in a first direction is greater than a first preset angle and is less than or equal to a second preset angle, and a variation range of the angle is less than a first preset value within preset time; and in the first state, the angle is less than or equal to the first preset angle or is greater than the second preset angle, and a variation range of the angle is greater than a second preset value within the preset time.

In this embodiment of this application, the second state may also be understood as that the first electronic device is placed on a holder of the first electronic device.

With reference to the first aspect, in an implementation of the first aspect, the method further includes: The first electronic device determines that a variation range of the angle is greater than or equal to the first preset value and is less than or equal to the second preset value within the preset time. The first electronic device determines that the first electronic device is in a third state, and the first electronic device continues to display the first display interface in the third state.

For example, the first state may be the normal state, the second state may be the holder state, and the third state may be an intermediate state.

In this embodiment of this application, the intermediate state is introduced, so that an electronic device can smoothly switch between the holder state and the normal state, to avoid a case that the electronic device switches the screen projection window due to accidental touch or shaking. This can provide misoperation tolerance for the user and therefore improve user experience.

With reference to the first aspect, in an implementation of the first aspect, a cursor on the second electronic device may be moved to the display of the first electronic device.

In this embodiment of this application, after the first electronic device suspends screen projection to the second electronic device, the first electronic device may serve as an extension screen of the second electronic device. In this case, the user may control the first electronic device by using a mouse.

With reference to the first aspect, in an implementation of the first aspect, the method further includes: The first electronic device determines that the second electronic device has switched from the second state to the first state. The first electronic device turns off the display, and continues to perform screen projection to the second electronic device.

In this embodiment of this application, when it is determined that the second electronic device has switched from the second state back to the first state, the first electronic device may automatically resume screen projection to the second electronic device, so that the screen projection window can be redisplayed on the second electronic device. In addition, the first electronic device turns off a screen, so that power consumption can be further reduced.

With reference to the first aspect, in an implementation of the first aspect, the method further includes: The first electronic device determines that the first electronic device has switched from the second state to the first state. The first electronic device continues to display the first display interface, and continues to perform screen projection to the second electronic device.

In this embodiment of this application, when it is determined that the first electronic device has switched from the second state back to the first state, screen projection to the second electronic device may be automatically resumed, so that the screen projection window can be redisplayed on the second electronic device. In addition, the first electronic device continues to display the first display interface, without affecting use of the first electronic device by the user.

With reference to the first aspect, in an implementation of the first aspect, before the first electronic device turns off the display, the method further includes: The first electronic device determines that no image of the user is obtained when a camera is turned on.

In this embodiment of this application, when the first electronic device turns on the camera and obtains no image of a user, the first electronic device may turn off a screen to reduce power consumption.

With reference to the first aspect, in an implementation of the first aspect, that the first electronic device suspends screen projection to the second electronic device and displays the first display interface, or the first electronic device displays the first display interface based on first data received from the second electronic device includes:
When it is determined that a distance between the first electronic device and the second electronic device is less than or equal to a preset distance, the first electronic device suspends screen projection to the second electronic device and displays the first display interface, or the first electronic device displays the first display interface based on the first data received from the second electronic device.

In this embodiment of this application, the distance between the first electronic device and the second electronic device should be within a preset distance range, to avoid a problem for the user in a case in which a screen projection status still switches when the user holds the first electronic device far away from the second electronic device.

According to a second aspect, a window switching method is provided. The method is applied to a second electronic device. The second electronic device is in a scenario in which a first electronic device performs screen projection to the second electronic device. The method includes: The second electronic device determines that the second electronic device or the first electronic device has switched from a first state to a second state, where an electronic device whose status is not switched is in the second state. The second electronic device displays a first icon, where the first icon indicates that a display of the first electronic device serves as an extension screen of the second electronic device.

In this embodiment of this application, after the first electronic device performs screen projection to the second electronic device, when the second electronic device determines that the first electronic device or the second electronic device has switched from the first state to the second state (for example, from a normal state to a holder state), an electronic device whose status is not switched is also in the second state. In this case, the second electronic device may display the first icon indicating that the display of the first electronic device serves as an extension screen of the second electronic device. In this case, a screen projection window on the second electronic device is automatically closed, and the second electronic device only needs to display the first icon. **In** addition, the first electronic device may serve as an extension screen of the second electronic device, to provide wider visual effect for a user and improve user experience.

It should be understood that the screen extension icon may also be referred to as an extension icon, an expansion icon, or the like. This is not limited in this embodiment of this application.

With reference to the second aspect, in an implementation of the second aspect, that the second electronic device displays a first icon includes: If a first display interface of the first electronic device is displayed on a display interface of the second electronic device in a form of a screen projection window, the second electronic device closes the first display interface and displays the first icon. If a first display interface of the first electronic device is displayed on a display interface of the second electronic device in a form of a screen projection icon, the second electronic device changes the screen projection icon to the first icon.

For example, the first icon may be a screen extension icon.

In this embodiment of this application, when the second electronic device displays the first icon, if a display interface of the first electronic device is displayed on the second electronic device in a form of a screen projection window, the second electronic device may close the screen projection window and display the first icon; or if a display interface of the first electronic device is already displayed on the second electronic device in a minimized form, the second electronic device may change a screen projection icon displayed in a minimized form to the first icon. In this technical solution, the second electronic device can finally display the first icon to notify the user that a current mode is a screen extension mode.

In some other embodiments, after the second electronic device detects an operation of tapping or clicking, by using a mouse, the first icon by the user, the first display interface may be redisplayed on the second electronic device in a form of a screen projection window.

With reference to the second aspect, in an implementation of the second aspect, that the second electronic device determines that the first electronic device has switched from a first state to a second state includes: receiving first indication information sent by the first electronic device, where the first indication information indicates that the first electronic device has switched from the first state to the second state; and determining, based on the first indication information, that the first electronic device has switched from the first state to the second state.

In this embodiment of this application, the second electronic device may further receive indication information that is sent by the first electronic device and that indicates that a status of the first electronic device changes, to determine that the status of the first electronic device changes, so that the second electronic device can perform a window switching policy.

With reference to the second aspect, in an implementation of the second aspect, if the second electronic device determines that the second electronic device has switched from the first state to the second state, the method further includes: sending second indication information to the first electronic device, where the second indication information indicates that the second electronic device has switched from the first state to the second state.

In this embodiment of this application, when the second electronic device determines that a status of the second electronic device changes, the second electronic device sends indication information for the status change to the first electronic device, so that the first electronic device determines that screen projection needs to be suspended.

With reference to the second aspect, in an implementation of the second aspect, the method further includes: The second electronic device sends first screen projection data to the first electronic device, where the first data is used to control the first electronic device to display the first display interface, and the first data is data projected by the first electronic device to the second electronic device.

In this embodiment of this application, the screen projection window can be conveniently switched onto the first electronic device for display. In this way, when the screen projection window is switched back onto the second electronic device, screen projection data does not need to be reloaded because screen projection is not interrupted, so that a delay can be reduced.

With reference to the second aspect, in an implementation of the second aspect, the method further includes: If the second electronic device determines that the first display interface is displayed on the display interface of the second electronic device in a full-screen form, when the second electronic device determines that the second electronic device or the first electronic device has switched from the first state to the second state, the second electronic device continues to display the first display interface.

In this embodiment of this application, when it is determined that one of the first electronic device or the second electronic device changes from the normal state to the holder state, the second electronic device may continue to display a screen projection window in a maximized or full-screen form, without affecting immersive experience of the user.

With reference to the second aspect, in an implementation of the second aspect, the first state and/or the second state are/is physical form of an electronic device.

With reference to the second aspect, in an implementation of the second aspect, the second state is the holder state, and the holder state indicates that the electronic device is in a stable state, or the holder state is a state in which the electronic device is placed on a holder; and the first state is the normal state, and the normal state indicates that the electronic device is in an unstable state, or the normal state is a state in which the electronic device is not placed on the holder.

With reference to the second aspect, in an implementation of the second aspect, in the second state, an angle of the second electronic device in a first direction is greater than a first preset angle and is less than or equal to a second preset angle, and a variation range of the angle is less than a first preset value within preset time; and in the first state, the angle is less than or equal to the first preset angle or is greater than the second preset angle, and a variation range of the angle is greater than a second preset value within the preset time.

In this embodiment of this application, the second state may also be understood as that the second electronic device is placed on a holder of the second electronic device.

With reference to the second aspect, in an implementation of the second aspect, the method further includes: The second electronic device determines that a variation range of the angle is greater than or equal to the first preset value and is less than or equal to the second preset value within the preset time. The second electronic device determines that the second electronic device is in a third state, and the second electronic device continues to display the first icon in the third state.

For example, the first state may be the normal state, the second state may be the holder state, and the third state may be an intermediate state.

In this embodiment of this application, the intermediate state is introduced, so that an electronic device can smoothly switch between the holder state and the normal state, to avoid a case that the electronic device switches a screen projection status due to accidental touch or shaking. This can provide misoperation tolerance for the user and therefore improve user experience.

With reference to the second aspect, in an implementation of the second aspect, a cursor on the second electronic device may be moved to the display of the first electronic device.

In this embodiment of this application, after the first electronic device suspends screen projection, the first electronic device may serve as an extension screen of the second electronic device. In this case, the user may control the first electronic device by using a mouse. This improves user experience.

With reference to the second aspect, in an implementation of the second aspect, the method further includes: The second electronic device determines that the second electronic device or the first electronic device has switched from the second state to the first state. The second electronic device closes the first icon and displays the first display interface in a form of a screen projection window, or the second electronic device changes the first icon to the screen projection icon.

In this embodiment of this application, when it is determined that the first electronic device or the second electronic device has switched from the holder state back to the normal state, the first electronic device resumes screen projection to the second electronic device. To be specific, the screen projection window is redisplayed on the second electronic device. In this case, the second electronic device may restore the screen projection window to an original state. This helps improve user experience.

With reference to the second aspect, in an implementation of the second aspect, the method further includes: The second electronic device turns on a camera and determines whether an image of a user is obtained. If no image is obtained, the second electronic device turns off a screen.

In this embodiment of this application, the second electronic device may turn on the camera and determine whether an image of a user is obtained, and may turn off the screen when no image of a user is obtained, to reduce power consumption.

With reference to the second aspect, in an implementation of the second aspect, that the second electronic device displays a first icon includes: The second electronic device displays the first icon when it is determined that a distance between the second electronic device and the first electronic device is less than or equal to a preset distance.

In this embodiment of this application, the distance between the first electronic device and the second electronic device should be within a preset distance range, to avoid a problem for the user in a case in which a screen projection status still switches when the user holds the first electronic device far away from the second electronic device.

According to a third aspect, a system is provided. The system includes a first electronic device and a second electronic device. The first electronic device and the second electronic device have a screen projection relationship. The first electronic device is configured to: when it is determined that the first electronic device or the second electronic device has switched from a first state to a second state, display a first display interface and suspend screen projection to the second electronic device, where the first display interface is a display interface projected by the first electronic device to the second electronic device, and an electronic device whose status is not switched is in the second state. The second electronic device is configured to: when it is determined that the first electronic device or the second electronic device has switched from the first state to the second state, display a first icon, where the first icon indicates that a display of the first electronic device serves as an extension screen of the second electronic device.

In this embodiment of this application, after the first electronic device performs screen projection to the second electronic device, when it is determined that the first electronic device or the second electronic device has switched from the first state to the second state, the first electronic device may display the first display interface and suspend screen projection to the second electronic device; and the second electronic device displays the first icon, where the first icon indicates that the display of the first electronic device serves as an extension screen of the second electronic device. In this technical solution, when it is detected that a status of an electronic device changes, screen projection may be automatically suspended, and a display of a projected-from electronic device may serve as an extension screen of another projected-to electronic device, to omit some operations of a user, so that user experience can be improved.

According to a fourth aspect, an electronic device is provided, and includes one or more processors and one or more memories. The one or more memories store one or more computer programs. The one or more computer programs include instructions. When the instructions are executed by the one or more processors, the window switching method according to any one of the first aspect or the possible implementations of the first aspect is performed.

According to a fifth aspect, an electronic device is provided, and includes one or more processors and one or more memories. The one or more memories store one or more computer programs. The one or more computer programs include instructions. When the instructions are executed by the one or more processors, the window switching method according to any one of the second aspect or the possible implementations of the second aspect is performed.

According to a sixth aspect, a system is provided, and includes the electronic device according to the third aspect and the electronic device according to the fourth aspect.

According to a seventh aspect, a window switching apparatus is provided, and includes a module for implementing the window switching method according to any one of the first aspect, the second aspect, or the possible implementations of the first aspect or the second aspect.

According to an eighth aspect, a chip is provided. The chip includes a processor and a communication interface. The communication interface is configured to receive a signal and transmit the signal to the processor. The processor processes the signal, so that the window switching method according to any one of the first aspect, the second aspect, or the possible implementations of the first aspect or the second aspect is performed.

According to a ninth aspect, a computer-readable storage medium is provided. The computer-readable storage medium stores computer instructions. When the computer instructions are run on a computer, the window switching method according to any one of the first aspect, the second aspect, or the possible implementations of the first aspect or the second aspect is performed.

According to a tenth aspect, a computer program product is provided. The computer program product includes computer program code. When the computer program code is run on a computer, the window switching method according to any one of the first aspect, the second aspect, or the possible implementations of the first aspect or the second aspect is performed.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3(a) and FIG. 3(b) are a diagram of a group of GUIs according to an embodiment of this application;
FIG. 4(a) and FIG. 4(b) are a diagram of another group of GUIs according to an embodiment of this application;
FIG. 5(a) and FIG. 5(b) are a diagram of another group of GUIs according to an embodiment of this application;
FIG. 6(a), FIG. 6(b), and FIG. 6(c) are a diagram of another group of GUIs according to an embodiment of this application;
FIG. 7(a) and FIG. 7(b) are a diagram of another group of GUIs according to an embodiment of this application;
FIG. 8 is a diagram of an electronic device switching between a plurality of states according to an embodiment of this application;
FIG. 9 is a diagram of axial directions of an electronic device according to an embodiment of this application;
FIG. 10 is a diagram of an electronic device and a holder according to an embodiment of this application;
FIG. 11 is a schematic flowchart of a window switching method according to an embodiment of this application; and
FIG. 12 is a schematic flowchart of another window switching method according to an embodiment of this application.

### DESCRIPTION OF EMBODIMENTS

The following describes technical solutions in embodiments of this application with reference to accompanying drawings.

A display method in embodiments of this application may be applied to an electronic device, for example, a smartphone, a tablet computer, a notebook computer, a personal computer (personal computer, PC), an ultra-mobile personal computer (ultra-mobile personal computer, UMPC), a netbook, a personal digital assistant (personal digital assistant, PDA), a vehicle-mounted device, a wearable device, or a foldable device.

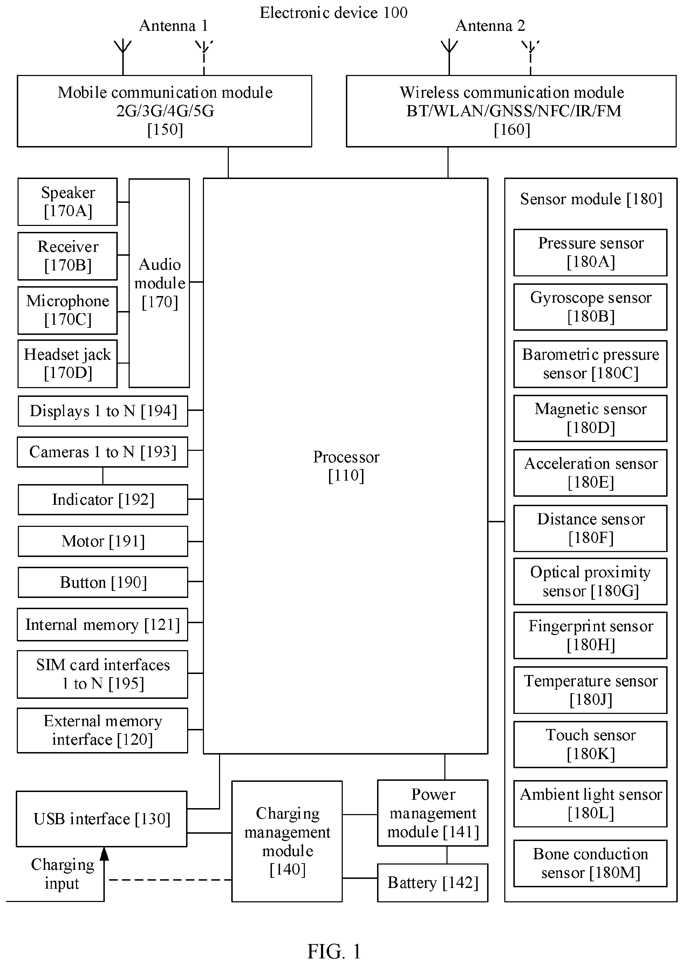

FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to control instruction reading and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL).

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be used for audio communication, and sampling, quantization, and encoding of an analog signal. In some embodiments, the audio module 170 may be coupled to the wireless communication module 160 through the PCM bus interface.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160.

The MIPI interface may be configured to connect the processor 110 to a peripheral component such as the display 194 or the camera 193.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like.

The USB interface 130 is an interface that conforms to a USB standard specification, and may be specifically a mini USB interface, a micro USB interface, a USB type-C interface, or the like. The USB interface 130 may be used for connecting a charger to charge the electronic device 100, or may be configured to transmit data between the electronic device 100 and a peripheral device.

It can be understood that an interface connection relationship between the modules shown in this embodiment of this application is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive charging input from the charger. The charger may be a wireless charger or a wired charger. In some embodiments of wired charging, the charging management module 140 may receive charging input from a wired charger through the USB interface 130. In some embodiments of wireless charging, the charging management module 140 may receive wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110.

A wireless communication function of the electronic device 100 may be implemented by the antenna 1, the antenna 2, the mobile communication module 150, the wireless communication module 160, the modem processor, the baseband processor, and the like.

The mobile communication module 150 may provide a solution for the electronic device 100 for wireless communication such as 2G/3G/4G/5G.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution for the electronic device 100 for wireless communication such as a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, or an infrared (infrared, IR) technology.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), or may be a display panel made of one of the following materials: an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), and the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. The camera 193 is configured to capture a static image or a video.

The digital signal processor is configured to process a digital signal, and may process other digital signals in addition to a digital image signal.

The video codec is configured to compress or decompress a digital video. The electronic device 100 may support one or more types of video codecs.

The external memory interface 120 may be used for connecting an external memory card, for example, a microSD card, to extend a storage capability of the electronic device 100.

The internal memory 121 may be configured to store computer-executable program code. The executable program code includes instructions. The processor 110 runs the instructions stored in the internal memory 121 to implement various function applications and data processing of the electronic device 100.

The electronic device 100 may implement an audio function, for example, music play and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal.

The speaker 170A, also referred to as a "loudspeaker", is configured to convert an electrical audio signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is used for connecting a wired headset.

The pressure sensor 180A is configured to sense a pressure signal, and may convert the pressure signal into an electrical signal. In some embodiments, the pressure sensor 180A may be disposed on the display 194.

The gyroscope sensor 180B may be configured to determine a motion attitude of the electronic device 100.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The acceleration sensor 180E may detect accelerations in various directions (usually on three axes) of the electronic device 100.

The distance sensor 180F is configured to measure a distance.

The fingerprint sensor 180H is configured to capture a fingerprint.

The touch sensor 180K is also referred to as a "touch panel". The touch sensor 180K may be disposed on the display 194, and the touch sensor 180K and the display 194 constitute a touchscreen, which is also referred to as a "touch control screen".

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like.

The motor 191 may generate a vibration prompt.

The indicator 192 may be an indicator light, and may be configured to indicate a charging status and a battery level change, or may be configured to indicate a message, a missed call, a notification, and the like.

The SIM card interface 195 is used for connecting a SIM card.

A software system of the electronic device 100 may use a hierarchical architecture, an event-driven architecture, a microkernel architecture, a micro service architecture, or a cloud architecture. In embodiments of this application, an operating system with a hierarchical architecture is used as an example to describe a software structure of the electronic device 100.

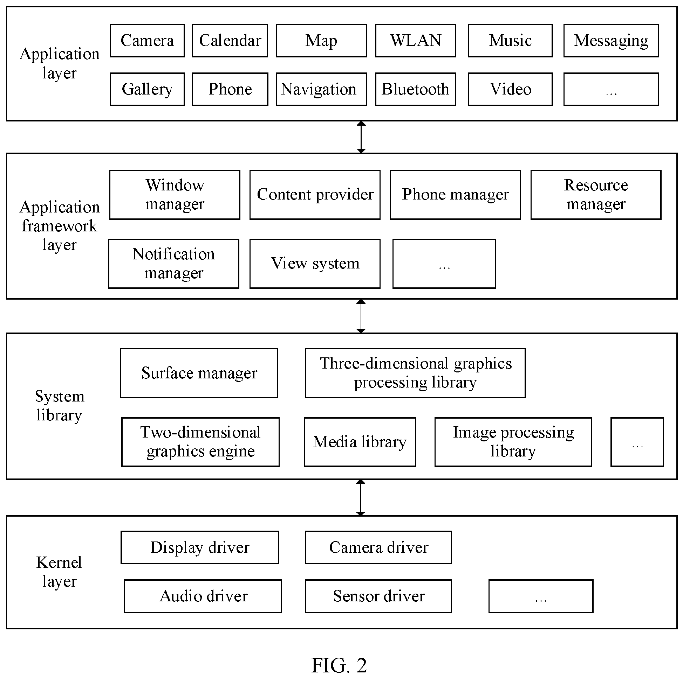

FIG. 2 is a block diagram of a software structure of the electronic device 100 according to an embodiment of this application. In a hierarchical architecture, software is divided into several layers, and each layer has a clear role and task. The layers communicate with each other through a software interface. In some embodiments, the operating system is divided into four layers: an application layer, an application framework layer, a system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, Messaging, and Wallet.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history, a bookmark, an address book, and the like.

The view system includes visual controls, such as a control for displaying text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on the screen in a form of a dialog window. For example, text information is displayed in the status bar, an alert tone is made, the electronic device vibrates, or an indicator blinks.

A kernel library includes two parts: a performance function that needs to be invoked in Java language, and a kernel library.

The application layer and the application framework layer run on a virtual machine. The virtual machine executes Java files at the application layer and the application framework layer as binary files. The virtual machine is configured to perform object lifecycle management, stack management, thread management, security and exception management, garbage collection, and other functions.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports play and recording of a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before technical solutions in embodiments of this application are described, some terms that may be used in this application are first briefly described.

Screen projection: A picture displayed on a display of an electronic device A is displayed on a display of an electronic device B in a window or full-screen form.

Screen extension: An electronic device A may suspend screen projection to an electronic device B, and a screen of the electronic device A serves as an extension screen of the electronic device B. Alternatively, the electronic device B displays, on the electronic device A, content projected by the electronic device A, and the screen of the electronic device A serves as an extension screen of the electronic device B. In this case, a mouse on the electronic device B may be moved to the electronic device A. Optionally, a screen extension icon is displayed on a display of the electronic device B.

Holder state: A y-axis angle α1 of an electronic device meets a formula 1: a first preset angle < α1 ≤ a second preset angle; and a variation range of the angle α1 is less than a first preset value within preset time t. For example, the first preset angle may be 30°, the second preset angle is 90°, the time t is 1s, and the first preset value is 0.03. It should be understood that specific values of the first preset angle, the second preset angle, the time t, and the preset value may alternatively be other values. The angle α1 may alternatively be determined by using another method based on different manners of setting the first preset angle and/or the second preset angle. This is not limited in embodiments of this application. In embodiments of this application, that an electronic device is placed on a holder may be understood as that the electronic device is in a holder state. For specific descriptions of the holder state, refer to the following descriptions. Details are not described herein.

Intermediate state: A variation range of the angle α1 is greater than or equal to a first preset value and less than or equal to a second preset value within preset time t. For example, the first preset value is 0.03, and the second preset value is 5. It should be understood that the intermediate state may also be referred to as a transition state, a near-switching state, or the like.

Normal state: A y-axis angle α1 of an electronic device does not meet the formula 1, and a variation range of the angle α1 is greater than a second preset value within preset time t. In embodiments of this application, that the electronic device is removed from a holder may be understood as that the electronic device changes from a holder state to the normal state.

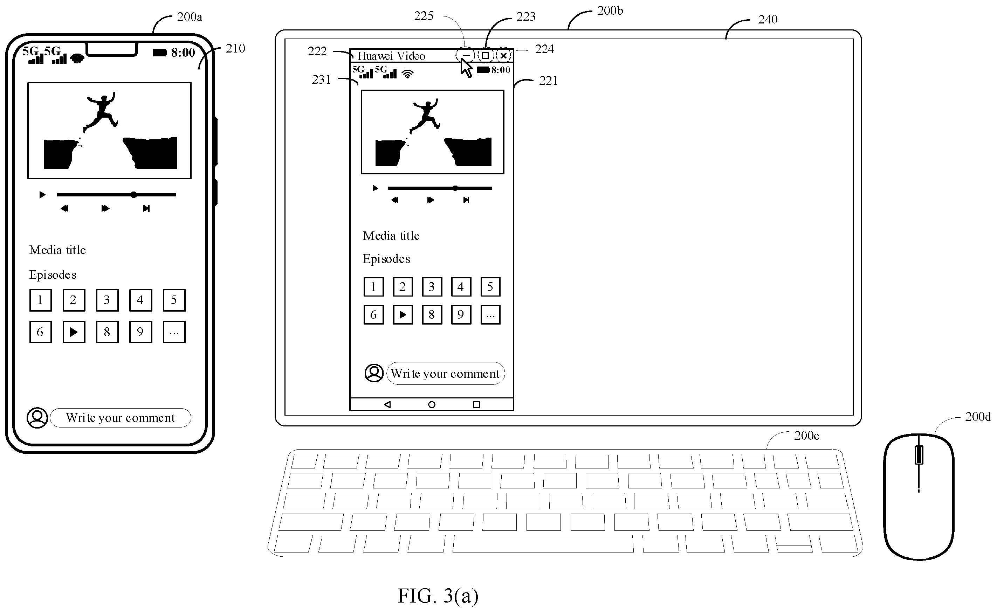

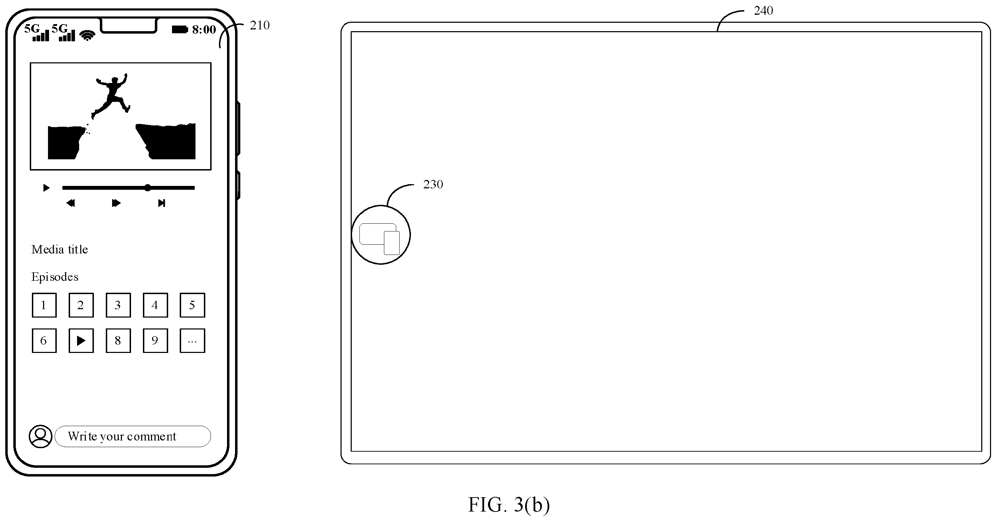

FIG. 3(a) and FIG. 3(b) are a diagram of a group of graphical user interfaces (graphical user interface, GUI) according to an embodiment of this application. FIG. 3(a) and FIG. 3(b) show a process of performing, by a mobile phone 200a, screen projection to a tablet computer 200b.

In this embodiment of this application, an external keyboard 200c and a mouse 200d may be connected to the tablet computer 200a. For example, the keyboard 200c and the mouse 200d may establish a connection relationship with the tablet computer 200b in a wired or wireless manner, so that a user can conveniently perform an office operation or the like on the tablet computer 200b.

It should be understood that the mobile phone 200a may establish a connection relationship with the tablet computer 200b before the mobile phone 200a performs screen projection to the tablet computer 200b. For example, the mobile phone may establish a connection relationship with the tablet computer in a wireless or wired manner.

As shown in FIG. 3(a), the GUIs are a display interface 210 of the mobile phone 200a and a display interface 240 of the tablet computer 200b that appear after the mobile phone 200a performs screen projection to the tablet computer 200b. The display interface 240 may include a screen projection window 221 of the mobile phone 200a. The screen projection window 221 may include a status bar 222 and a display interface 231. The status bar 222 may include a name of an application to which an interface currently displayed on the mobile phone belongs, for example, Huawei Video. The status bar 222 may further include a minimize button 223, a maximize button 224, and a close button 225 that are used to change the screen projection window 221.

It should be understood that, in some examples, the display interface 231 is the same as the display interface 210 of the mobile phone. In other words, a current display interface of the mobile phone is displayed on the tablet computer 200b by using the display interface 231.

In some other examples, the display interface 231 may alternatively be different from the display interface 210 of the mobile phone. In other words, although some interfaces of the mobile phone are projected to the tablet computer, the mobile phone may still display an interface different from a projected interface. For example, an application A of the mobile phone is started on the tablet computer. To be specific, the mobile phone projects an interface of the application A to the tablet computer. Then a user of the mobile phone may start an application B, and an interface of the application B is displayed on the mobile phone. This is similar to a heterogeneous screen projection scenario in the conventional technology.

In some examples, if no user operation is detected within preset time after the mobile phone 200a performs screen projection to the tablet computer 200b, the mobile phone 200a may turn off a screen to reduce power consumption of the mobile phone 200a.

After detecting an operation of clicking the minimize button 223 by the user by using the mouse, the tablet computer 200b may display a GUI shown in FIG. 3(b).

As shown in FIG. 3(b), a screen projection icon 230 may be displayed on the display interface 240 of the tablet computer 200b, so that the screen projection window 221 can be displayed in a minimized form.

After detecting an operation of clicking the screen projection icon 230 by the user by using the mouse 200d, the tablet computer 200b may redisplay the screen projection window 221 on the display interface 240. When the user uses the tablet computer 200b, the screen projection window 221 may block some content displayed on the tablet computer 200b. Therefore, the user may minimize the screen projection window 221 for display, and redisplay the screen projection window when needed, without affecting use of the tablet computer 200b by the user. However, the user needs to perform frequent operations for switching the screen projection window. This affects user experience.

In view of this, embodiments of this application provide a window switching method. In this technical solution, when a status of a projected-from electronic device or another projected-to electronic device changes, a display of the projected-from electronic device may serve as an extension screen of the projected-to electronic device, and the another projected-to electronic device may display a screen extension icon, without specifically displaying a screen projection window, to avoid excessive switching operations of a user.

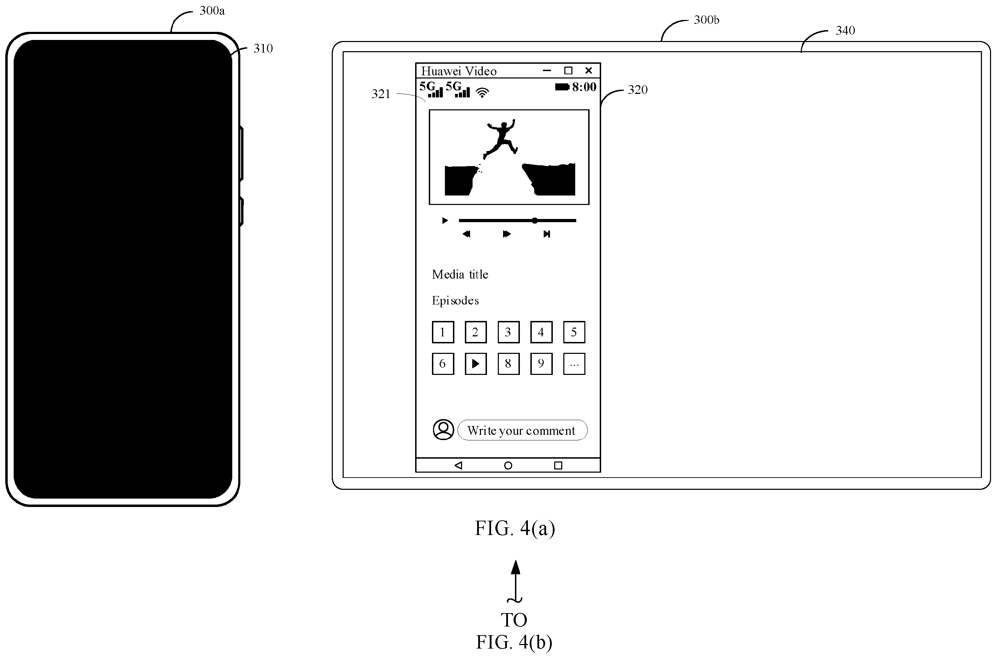

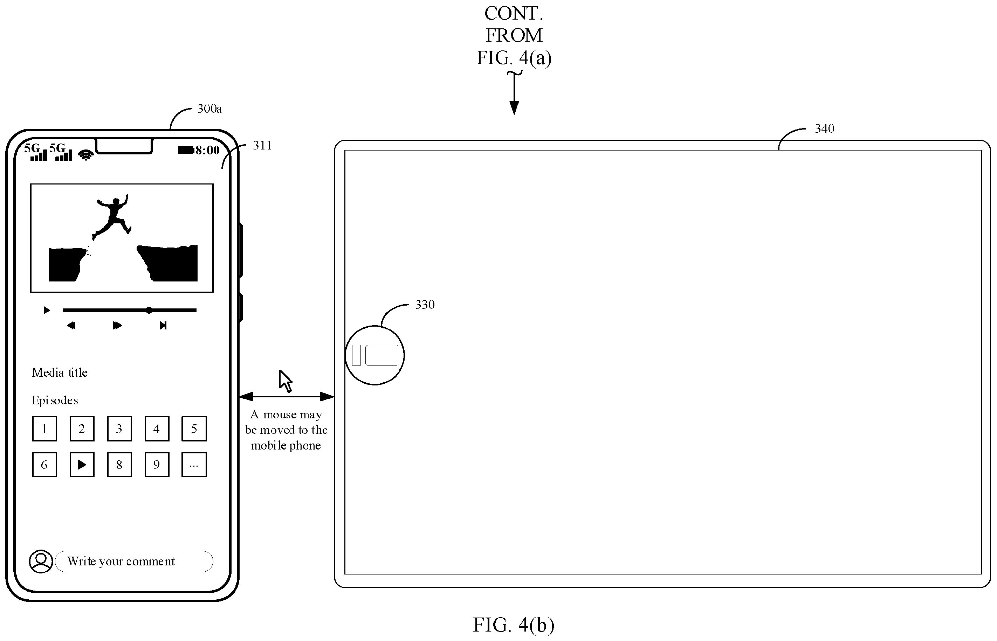

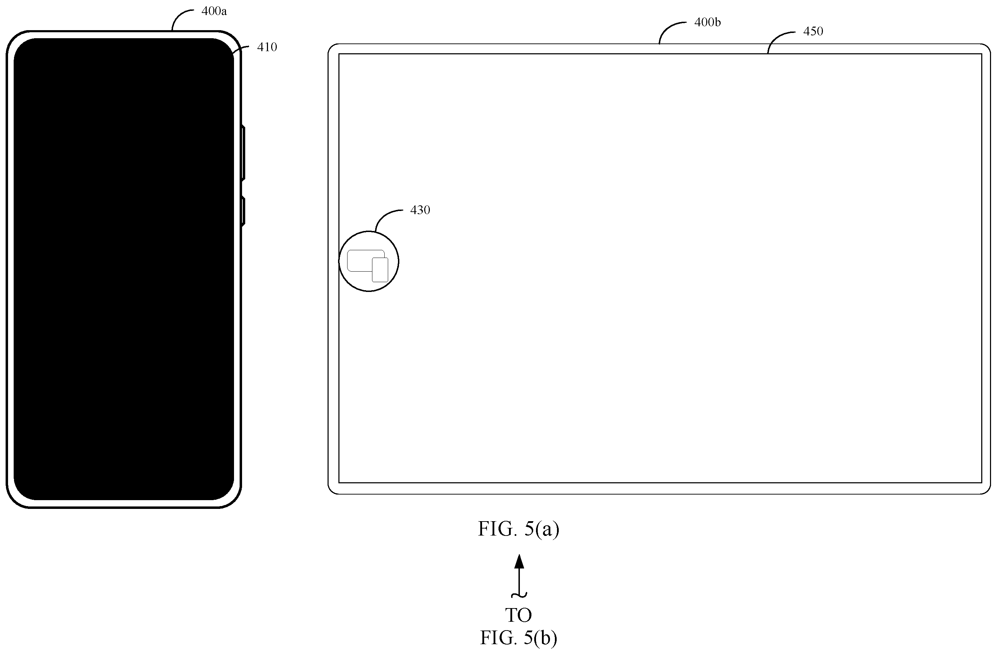

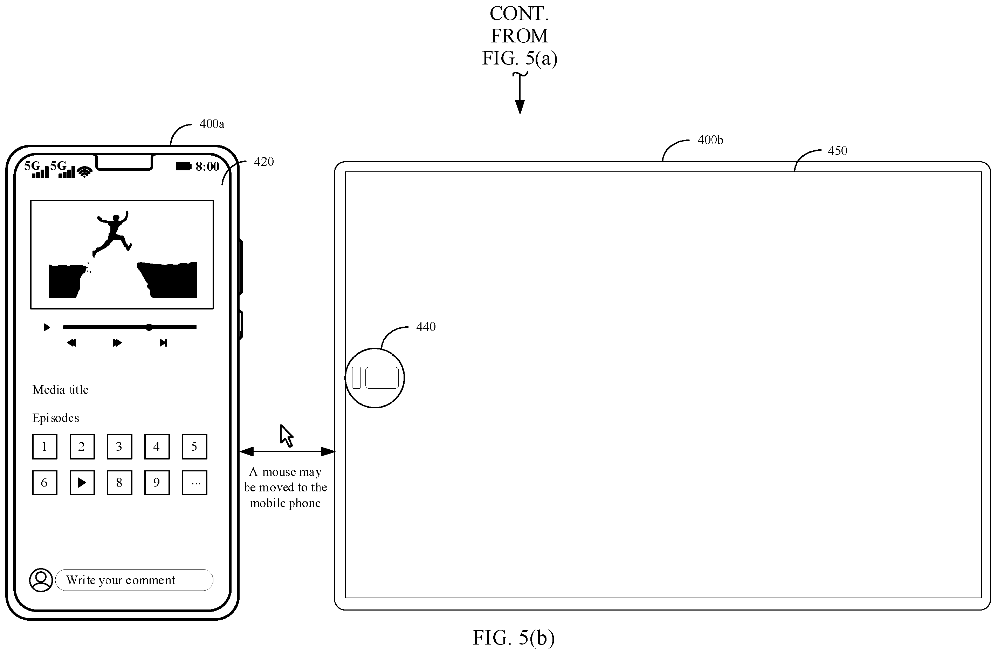

As shown in FIG. 3(a) and FIG. 3(b), after the mobile phone performs screen projection to the tablet computer, a display interface of the mobile phone may be displayed on a display interface of the tablet computer in a form of a screen projection window, or may be displayed on the display interface of the tablet computer in a minimized form (as a screen projection icon). The two technical solutions are described below with reference to FIG. 4(a) and FIG. 4(b), and FIG. 5(a) and FIG. 5(b) respectively.

FIG. 4(a) and FIG. 4(b) are a diagram of another group of GUIs according to an embodiment of this application. FIG. 4(a) and FIG. 4(b) show a process in which a screen projection window changes on a tablet computer 300b.

As shown in FIG. 4(a), the GUIs are a display interface 310 of a mobile phone 300a and a display interface 340 of the tablet computer 300b that appear after the mobile phone 300a performs screen projection to the tablet computer 300b.

After performing screen projection to the tablet computer 300b, the mobile phone 300a may turn off a screen to reduce power consumption, or the mobile phone 300a may continue to stay in a screen-on state. This is not limited in this embodiment of this application.

It should be understood that an external keyboard or a mouse may alternatively be connected to the tablet computer 300b. For the display interface 340 of the tablet computer 300b, refer to the foregoing related descriptions of the display interface 240. For brevity, details are not described herein again.

In a case, the tablet computer 300a may be in a holder state. When the mobile phone 300a changes from a normal state to a holder state, the mobile phone 300a and the tablet computer 300b may display GUIs shown in FIG. 4(b).

For example, after performing screen projection, the mobile phone may turn off the display to reduce power consumption. When a user places the mobile phone on a holder of the mobile phone, the mobile phone may determine, by detecting a y-axis angle, that the mobile phone changes from the normal state to the holder state.

It should be understood that, when the mobile phone is placed on the holder of the mobile phone, the y-axis angle α1 of the mobile phone needs to meet a definition of the holder state.

It should be understood that, in this embodiment of this application, that the tablet computer 300a is in the holder state may be understood as that the tablet computer 300a is placed on a holder. For example, if the user wants to use the tablet computer 300a for office work, the user may connect an external keyboard and a mouse to the tablet computer 300a, and place the tablet computer 300a on the holder of the tablet computer.

It should be further understood that, when the tablet computer is placed on the holder of the tablet computer, a y-axis angle α1 of the tablet computer needs to meet a definition of the holder state.

In another case, the mobile phone may be in the holder state. When the tablet computer 300b changes from a normal state to the holder state, the mobile phone 300a and the tablet computer 300b may display the GUIs shown in FIG. 4(b).

For example, after the mobile phone performs screen projection to the tablet computer, the user places the mobile phone on the holder of the mobile phone, and the user places the tablet computer being used on the holder of the tablet computer. In this case, the tablet computer may change from the normal state to the holder state.

As shown in FIG. 4(b), the mobile phone 300a switches from a screen-off state to a screen-on state and displays a display interface 311, and a screen projection window 320 on the tablet computer 300b disappears. Optionally, a screen extension icon 330 is displayed on the tablet computer 300b. In some examples, the mouse may be moved to the display interface 311 of the mobile phone 300a, and the user may control the mobile phone 300a by using the mouse. In other words, the display of the mobile phone 300a may serve as an extension screen of the tablet computer 300b.

It should be understood that controlling the mobile phone by using the mouse may be implemented based on near field communication such as Bluetooth or Wi-Fi. When the user operates the mouse, the tablet computer obtains coordinates of a mouse pointer. When the display of the mobile phone is not an extension screen of the tablet computer and the coordinates of the mouse pointer go beyond a control area (display) of the tablet computer, the tablet computer displays the mouse pointer at an edge (for example, a left edge) of the control area. In this embodiment of this application, the display of the mobile phone serves as an extension screen of the tablet computer. When the coordinates of the mouse pointer corresponding to the tablet computer go beyond one side (for example, the left edge, a right edge, an upper edge, or a lower edge) of the control area of the tablet computer, the tablet computer sends mouse data (including coordinate data and operation data of the mouse) to the mobile phone through Bluetooth, Wi-Fi, or the like. The mobile phone maps the received mouse data to a corresponding location on the mobile phone, displays the mouse pointer on a display interface, and performs a corresponding mouse operation on the mobile phone side. In terms of experience, effect of seamlessly moving, by the user, the mouse pointer from an edge of the tablet computer to the mobile phone is achieved.

In some examples, a distance between the mobile phone and the tablet computer is less than or equal to a preset distance.

In some examples, when the mobile phone is located on the left of the tablet computer, the screen extension icon may be located at the left edge of the tablet computer, and a pattern indicating the mobile phone in the screen extension icon is located on the left of a pattern of the tablet computer. When the mobile phone is located on the right of the tablet computer, the screen extension icon may be located at the right edge of the tablet computer, and a pattern indicating the mobile phone in the screen extension icon is located on the right of a pattern of the tablet computer. Alternatively, the screen extension icon may be located in a taskbar at the bottom of the tablet computer. This is not limited in this embodiment of this application.

For example, after the mobile phone establishes a screen projection relationship with the tablet computer, the mobile phone may send orientation information of the mobile phone to the tablet computer through Bluetooth, so that the tablet computer may determine an orientation of the mobile phone.

In some examples, after the user performs an operation of clicking the screen extension icon 330 by using the mouse, the screen projection window 320 is redisplayed on the display interface 340 of the tablet computer 300b.

It should be understood that the tablet computer 300b may alternatively be replaced with a personal computer PC, and the mobile phone 300a may alternatively be replaced with a tablet computer; or the two devices may be devices of a same type. This is not limited in this embodiment of this application.

In this embodiment of this application, after the mobile phone establishes a screen projection relationship with the tablet computer, a display interface of the mobile phone may be displayed on a display interface of the tablet computer in a form of a screen projection window. When one of the mobile phone and the tablet computer is in a holder state and the other changes from a normal state to a holder state, the mobile phone automatically suspends screen projection to the tablet computer, a screen projection window on the tablet computer may be closed, and a screen extension icon is displayed. In this case, the display of the mobile phone may serve as an extension screen of the tablet computer. In this technical solution, screen projection may be automatically suspended based on a posture change of the mobile phone or the tablet computer, without a manual operation of the user, so that user experience of using multi-screen collaboration can be improved.

Alternatively, in this embodiment of this application, when a status of an electronic device changes, the mobile phone may continue to perform screen projection to the tablet computer, receive first data sent by the tablet computer, and display a projected interface based on the first data, so that the screen projection window can be conveniently switched onto the mobile phone for display. In this way, when the screen projection window is switched back onto the tablet computer, screen projection data does not need to be reloaded because screen projection is not interrupted, so that a delay can be reduced.

In some cases, when both the mobile phone and the tablet computer are in the holder state, the user may need to use the mobile phone or the tablet computer, and therefore remove the mobile phone or the tablet computer from the holder. For example, the user removes the mobile phone from the holder, and places the mobile phone on a table or puts the mobile phone into a pocket; or the user removes the tablet computer from the holder. In this case, the mobile phone may reenter a screen-off state and automatically resume screen projection to the tablet computer, and the screen projection window is redisplayed on a display interface of the tablet computer.

For example, in the scenario shown in FIG. 4(b), when the mobile phone 300a changes from the holder state to the normal state, the mobile phone 300a and the tablet computer 300b may display GUIs shown in FIG. 4(a).

In another example, in the scenario shown in FIG. 4(b), when the tablet computer 300b changes from the holder state to the normal state, the mobile phone 300a and the tablet computer 300b may display the GUIs shown in FIG. 4(a).

In this technical solution, when both the mobile phone and the tablet computer are in the holder state and one of the mobile phone and the tablet computer changes from the holder state to the normal state, the screen projection window may be redisplayed on a display interface of the tablet computer. In this way, screen projection can be conveniently and automatically resumed based on a posture change of the mobile phone or the tablet computer. This avoids a manual operation of the user, and improves user experience of using multi-screen collaboration.

In some other examples, when the mobile phone changes from the holder state to the normal state, the screen projection window is switched back onto a display interface of the tablet computer. In this case, the tablet computer may turn on a camera to detect whether a portrait exists. When the tablet computer detects no portrait, the tablet computer may lock a screen to protect user privacy, or the tablet computer may turn off a screen to reduce power consumption. When the tablet computer detects a portrait, the tablet computer may continue to remain in a current state. Alternatively, further, when detecting a portrait, the tablet computer may determine, based on stored portraits, whether the detected portrait is an owner. If the detected portrait is the owner, the tablet computer may continue to remain in a current state. If the detected portrait is not the owner, the tablet computer may lock a screen or turn off a screen.

In another example, when the tablet computer changes from the holder state to the normal state, the screen projection window is switched back onto a display interface of the tablet computer. If the mobile phone is in a screen-on state, the mobile phone may turn on a camera to detect whether a portrait exists. When the mobile phone detects no portrait, the mobile phone may lock a screen to protect user privacy, or the mobile phone may turn off a screen to reduce power consumption. When the mobile phone detects a portrait, the mobile phone may continue to remain in a current state. Alternatively, further, when detecting a portrait, the mobile phone may determine, based on stored portraits, whether the detected portrait is an owner. If the detected portrait is the owner, the mobile phone may continue to remain in a current state. If the detected portrait is not the owner, the mobile phone may lock a screen or turn off a screen.

FIG. 5(a) and FIG. 5(b) are a diagram of another group of GUIs according to an embodiment of this application. FIG. 5(a) and FIG. 5(b) show a process in which screen projection from a mobile phone 400a to a tablet computer 400b changes.

As shown in FIG. 5(a), the GUIs are a display interface 410 of the mobile phone 400a and a display interface 450 of the tablet computer 400b that appear after the mobile phone 400a performs screen projection to the tablet computer 400b.

After the mobile phone 400a performs screen projection to the tablet computer 400b, the mobile phone 400a may turn off a display to reduce power consumption. Correspondingly, no interface element is displayed on the display interface 410. To prevent a screen projection window of the mobile phone from blocking a display interface of the tablet computer, a user may minimize the screen projection window for display. To be specific, a screen projection icon 430 is displayed on the display interface 450 of the tablet computer. When the user taps the screen projection icon 430, the screen projection window of the mobile phone may be redisplayed on the display interface 450.

It should be understood that an external keyboard or a mouse may alternatively be connected to the tablet computer 400b, to facilitate office work of the user on the tablet computer.

In a case, the tablet computer 400b is in a holder state, and the mobile phone 400a is in a normal state. When the mobile phone 400a changes from the normal state to a holder state, the mobile phone 400a and the tablet computer 400b may display GUIs shown in FIG. 5(b).

For example, that a mobile phone being used or a mobile phone placed on a table is placed by a user on a holder of the mobile phone may be understood as that the mobile phone changes from a normal state to a holder state.

It should be understood that, when the mobile phone is placed on the holder of the mobile phone, a y-axis angle α1 of the mobile phone needs to meet a definition of the holder state.

In another case, the tablet computer 400b is in a normal state, and the mobile phone 400a is in a holder state. When the tablet computer 400b changes from the normal state to a holder state, the mobile phone 400a and the tablet computer 400b may display the GUIs shown in FIG. 5(b).

For example, that a tablet computer being used or a tablet computer placed on a table is placed by a user on a holder of the tablet computer may be understood as that the tablet computer changes from a normal state to a holder state.

It should be understood that, when the tablet computer is placed on the holder of the tablet computer, a y-axis angle α1 of the tablet computer needs to meet a definition of the holder state.

As shown in FIG. 5(b), the mobile phone 400a switches from a screen-off state to a screen-on state and displays a display interface 420, and the screen projection icon 430 on the tablet computer 400b changes to a screen extension icon 440. In addition, the mouse may be moved to the display interface 420 of the mobile phone 400a, and the user may control the mobile phone 400a by using the mouse. In other words, the mobile phone 400a may serve as an extension screen of the tablet computer 400b.

For example, the user may implement an operation of entering a comment or switching an episode on the display interface 420 by using the mouse.

In some examples, a distance between the mobile phone and the tablet computer is less than or equal to a preset distance.

In some examples, when the mobile phone is located on the left of the tablet computer, the screen extension icon may be located at a left edge of the tablet computer, and a pattern indicating the mobile phone in the screen extension icon is located on the left of a pattern of the tablet computer. When the mobile phone is located on the right of the tablet computer, the screen extension icon may be located at a right edge of the tablet computer, and a pattern indicating the mobile phone in the screen extension icon is located on the right of a pattern of the tablet computer. Alternatively, the screen extension icon may be located in a taskbar at the bottom of the tablet computer. This is not limited in this embodiment of this application.

In some examples, after the user performs an operation of clicking the screen extension icon 440 by using the mouse, the screen projection window of the mobile phone is displayed on the display interface 450 of the tablet computer 400b.

It should be understood that the tablet computer 400b may alternatively be replaced with a PC. This is not limited in this embodiment of this application.

In this embodiment of this application, after the mobile phone establishes a screen projection relationship with the tablet computer, a display interface of the mobile phone may be displayed on a display interface of the tablet computer in a minimized form. When one of the mobile phone and the tablet computer is in a holder state and the other changes from a normal state to a holder state, the mobile phone automatically suspends screen projection to the tablet computer, a screen projection window on the tablet computer may be closed, and a screen projection icon changes to a screen extension icon. In this case, the display of the mobile phone may serve as an extension screen of the tablet computer. In this technical solution, screen projection may be automatically suspended based on a posture change of the mobile phone or the tablet computer, without a manual operation of the user, so that user experience of using multi-screen collaboration can be improved.

In some cases, when both the mobile phone and the tablet computer are in the holder state, the user may need to use the mobile phone or the tablet computer, and therefore remove the mobile phone or the tablet computer from the holder. For example, the user removes the mobile phone from the holder, and places the mobile phone on a table or puts the mobile phone into a pocket; or the user removes the tablet computer from the holder. In this case, the mobile phone may reenter a screen-off state, and the screen projection window is switched back onto the tablet computer and is displayed on a display interface of the tablet computer in a minimized form.

For example, in the scenario shown in FIG. 5(b), when the tablet computer 400b changes from the holder state to the normal state, the mobile phone 400a and the tablet computer 400b may display GUIs shown in FIG. 5(a).

In another example, in the scenario shown in FIG. 5(b), when the tablet computer 400b changes from the holder state to the normal state, the mobile phone 400a and the tablet computer 400b may display the GUIs shown in FIG. 5(a).

In this technical solution, when both the mobile phone and the tablet computer are in the holder state and one of the mobile phone and the tablet computer changes from the holder state to the normal state, the mobile phone automatically resumes screen projection, and a screen projection window is displayed on a display interface of the tablet computer in a minimized form. In this way, screen projection can be conveniently and automatically resumed based on a posture change of the mobile phone or the tablet computer. This avoids a manual operation of the user, and improves user experience of using multi-screen collaboration.

In some other examples, when the mobile phone changes from the holder state to the normal state, the screen projection window is displayed on a display interface of the tablet computer in a minimized form. In this case, the tablet computer may turn on a camera to detect whether a portrait exists.

It should be understood that, for a technical solution in which the tablet computer turns on the camera to detect whether a portrait exists, reference may be made to the foregoing related descriptions.

In another example, when the tablet computer changes from the holder state to the normal state, the screen projection window is redisplayed on a display interface of the tablet computer. If the mobile phone is in a screen-on state, the mobile phone may turn on a camera to detect whether a portrait exists.

It should be understood that, for a technical solution in which the mobile phone in the screen-on state turns on the camera to detect whether a portrait exists, reference may be made to the foregoing related descriptions.

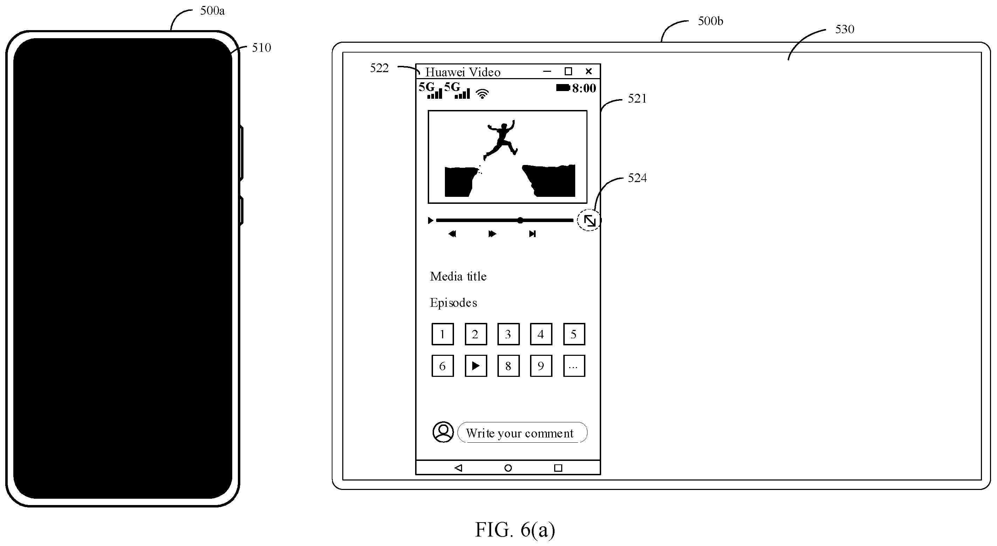

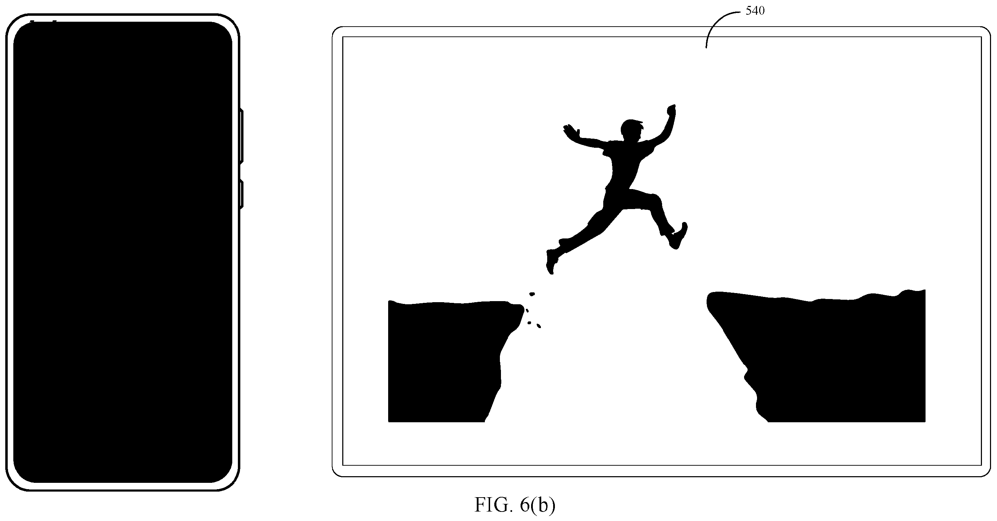

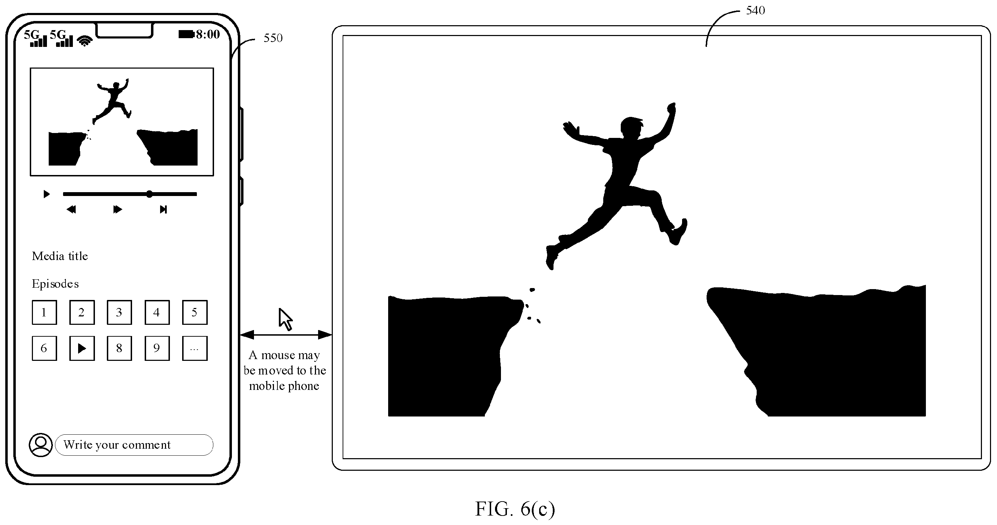

After the mobile phone performs screen projection to the tablet computer, the user may make a screen projection window be displayed on the tablet computer in a maximized or full-screen form. In this case, when a status of the mobile phone or the tablet computer changes, the tablet computer continues to display the screen projection window displayed in the maximized or full-screen form, without affecting immersive experience of the user. This technical solution is described below with reference to FIG. 6(a), FIG. 6(b), and FIG. 6(c).

FIG. 6(a), FIG. 6(b), and FIG. 6(c) are a diagram of another group of GUIs according to an embodiment of this application. FIG. 6(a) to FIG. 6(c) show a process in which screen projection from a mobile phone 500a to a tablet computer 500b changes when a screen projection window is displayed in a full-screen form.

For FIG. 6(a), refer to related descriptions of FIG. 4(a). For brevity, details are not described again.

After the tablet computer 500b detects an operation of tapping/clicking, by a user, a function button 524 by using a finger, a stylus, or a mouse, the mobile phone 500a and the tablet computer 500b may display GUIs shown in FIG. 6(b).

In some other examples, when the user taps/clicks a maximize button in a status bar 522 by using a finger, a stylus, or a mouse, the screen projection window 521 may be displayed on a display interface 540 in a maximized form. In this case, the display interface 540 changes to the maximized screen projection window 521.

As shown in FIG. 6(b), the mobile phone continues to stay in a screen-off state, the tablet computer displays the display interface 540, and the display interface 540 includes a media video in a full-screen form.

In some examples, when the user slides on the display interface 540 by using a mouse, the display interface 540 may further display a status bar 522, and the display interface 540 may further display a taskbar or the like.

In some cases, the tablet computer 500b may be in a holder state. When the mobile phone 500a changes from a normal state to a holder state, the mobile phone 500a and the tablet computer 500b may display GUIs shown in FIG. 6(c).

For example, that a mobile phone being used or a mobile phone placed on a table is placed by a user on a holder of the mobile phone may be understood as that the mobile phone changes from a normal state to a holder state.

It should be understood that, when the mobile phone is placed on the holder of the mobile phone, a y-axis angle α1 of the mobile phone needs to meet a definition of the holder state.

In some other cases, the mobile phone 500a may be in the holder state. When the tablet computer 500b changes from a normal state to the holder state, the mobile phone 500a and the tablet computer 500b may display the GUIs shown in FIG. 6(c).

For example, that a tablet computer being used or a tablet computer placed on a table is placed by a user on a holder of the tablet computer may be understood as that the tablet computer changes from a normal state to a holder state.

It should be understood that, when the tablet computer is placed on the holder of the tablet computer, a y-axis angle α1 of the tablet computer needs to meet a definition of the holder state.

As shown in FIG. 6(c), the mobile phone 500a switches from the screen-off state to a screen-on state and displays a display interface 550, and the tablet computer 500b continues to display the display interface 540. In addition, the mouse may be moved to the display interface 550 of the mobile phone 500a, and the user may control the mobile phone 500a by using the mouse. In other words, the mobile phone 500a may serve as an extension screen of the tablet computer 500b.

For example, the user may implement an operation of entering a comment or switching an episode on the display interface 420 by using the mouse.

In some examples, a distance between the mobile phone and the tablet computer is less than or equal to a preset distance.

In this embodiment of this application, after the mobile phone establishes a screen projection relationship with the tablet computer, the user may perform an operation to display a screen projection window on the tablet computer in a maximized or full-screen form. When one of the mobile phone and the tablet computer is in a holder state and the other changes from a normal state to a holder state, the mobile phone still performs screen projection to the tablet computer, and the tablet computer continues to display a screen projection window in a maximized or full-screen form, without affecting immersive experience of the user.

For example, the user is watching a video on the mobile phone, and after screen projection is performed to the tablet computer, the user plays the video on the tablet computer in a full-screen form. When a status of the mobile phone or the tablet computer changes, if the mobile phone suspends screen projection to the tablet computer, video watching of the user may be affected, causing poor user experience. Therefore, in this embodiment of this application, when a status of the mobile phone or the tablet computer changes, the video played in a full-screen form is still retained on the tablet computer, without affecting user experience.

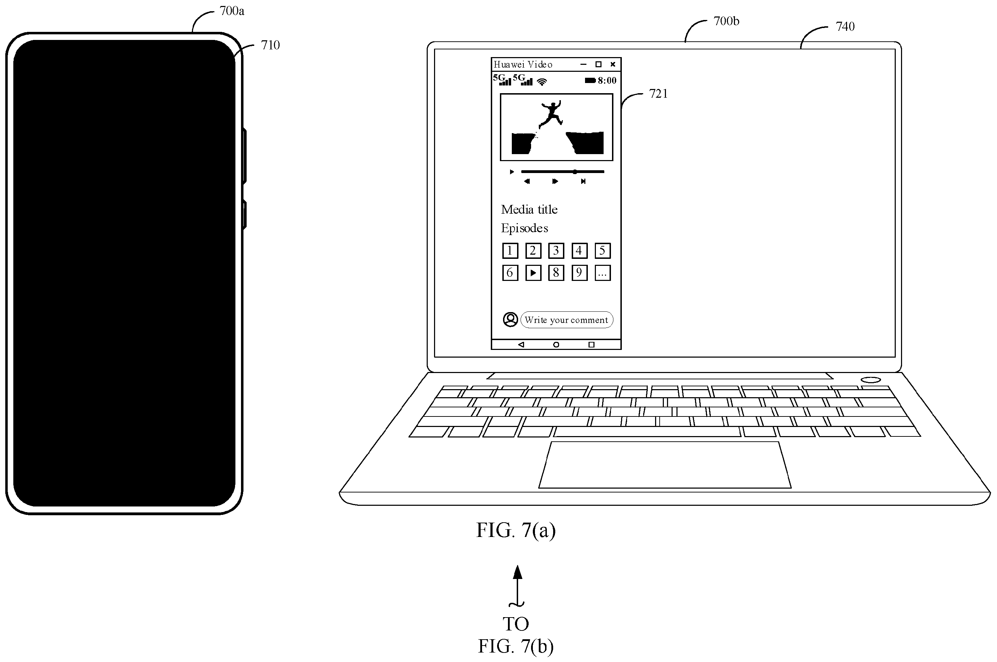

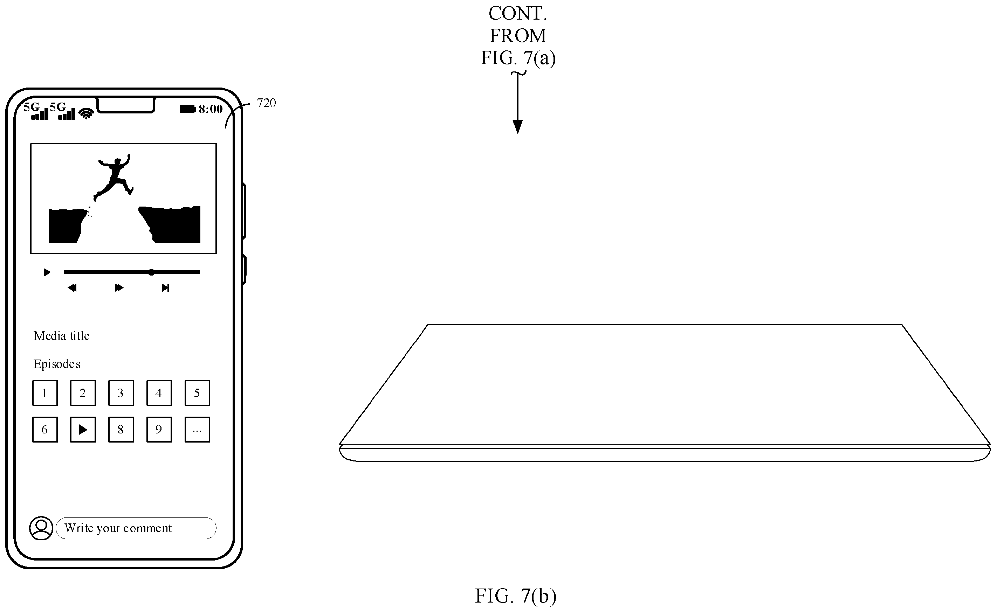

FIG. 7(a) and FIG. 7(b) are a diagram of GUIs according to an embodiment of this application. FIG. 7(a) and FIG. 7(b) show a process in which screen projection from a mobile phone 700a to a PC 700b changes.

As shown in FIG. 7(a), the GUIs are a display interface 710 of a mobile phone 700a and a display interface 740 of the PC 700b that appear after the mobile phone 700a performs screen projection to the PC 700b.

After the mobile phone 700a performs screen projection to the tablet computer PC 700b, the mobile phone 700a may turn off a display to reduce power consumption. Correspondingly, no interface element is displayed on the display interface 710. A screen projection window 721 of the mobile phone is displayed on the display interface 740 of the PC 700b.

It should be understood that, for the screen projection window 721, reference may be made to the foregoing related descriptions of the screen projection window 221. For brevity, details are not described again.

After the PC 700b detects that a cover of the PC 700b is closed, the mobile phone 700a and the PC 700b may display GUIs shown in FIG. 7(b).

As shown in FIG. 7(b), the mobile phone 700a switches from a screen-off state to a screen-on state and displays a display interface 720.

For example, after the PC 700b detects that the cover of the PC 700b is closed, the PC 700b may send a status indication message to the mobile phone 700a, to indicate a status of the PC 700b. After receiving the status indication message, the mobile phone 700a may switch from the screen-off state to the screen-on state and display the interface 720, to be specific, automatically suspend screen projection to the tablet computer, without a manual operation of a user.

In some other cases, in the scenario shown in FIG. 7(b), after the user opens an upper cover of the PC 700b, the mobile phone 700a and the PC 700b may display GUIs shown in FIG. 7(a). In this case, the mobile phone 700a may automatically resume screen projection to the PC 700b, and the screen projection window 721 of the mobile phone 700a may be redisplayed on the display interface 740 of the PC 700b. To reduce power consumption, the mobile phone may change to the screen-off state.

In this technical solution, after the upper cover of the PC is closed by the user, the mobile phone may automatically suspend screen projection, and switch from the screen-off state to the screen-on state. After the upper cover of the PC is opened by the user, the mobile phone may automatically resume screen projection, to avoid manual switching by the user and improve user experience.

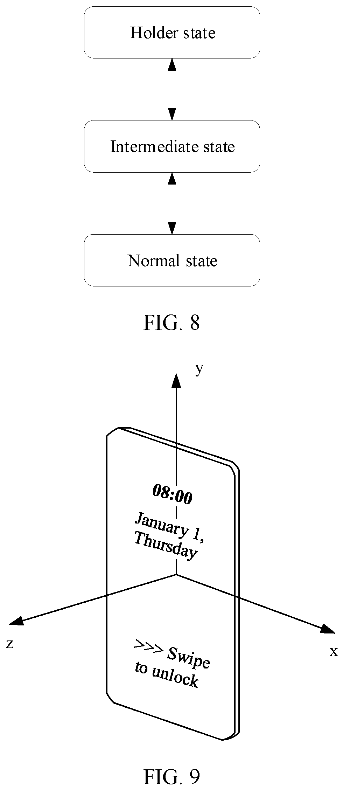

A plurality of states of an electronic device in embodiments of this application are described below with reference to FIG. 8 to FIG. 10.

FIG. 8 is a diagram of an electronic device switching between a plurality of states according to an embodiment of this application. As shown in FIG. 8, in this application, states of the electronic device may be classified into a normal state, a holder state, and an intermediate state between the normal state and the holder state.

The holder state of the electronic device may be understood as follows: A y-axis angle α1 of the electronic device in a portrait state meets a formula 1: a first preset angle < α1 ≤ a second preset angle; and a variation range of the angle α1 is less than a first preset value within preset time t. For example, the first preset angle may be 30°, the second preset angle is 90°, the time t is 1s, and the first preset value is 0.03. It should be understood that specific values of the first preset angle, the second preset angle, the time t, and the preset value may alternatively be other values. This is not limited in this embodiment of this application.

For example, as shown in FIG. 9, the electronic device may obtain the y-axis angle of the electronic device by using an inertial measurement unit (inertial measurement unit, IMU) or a sensor.

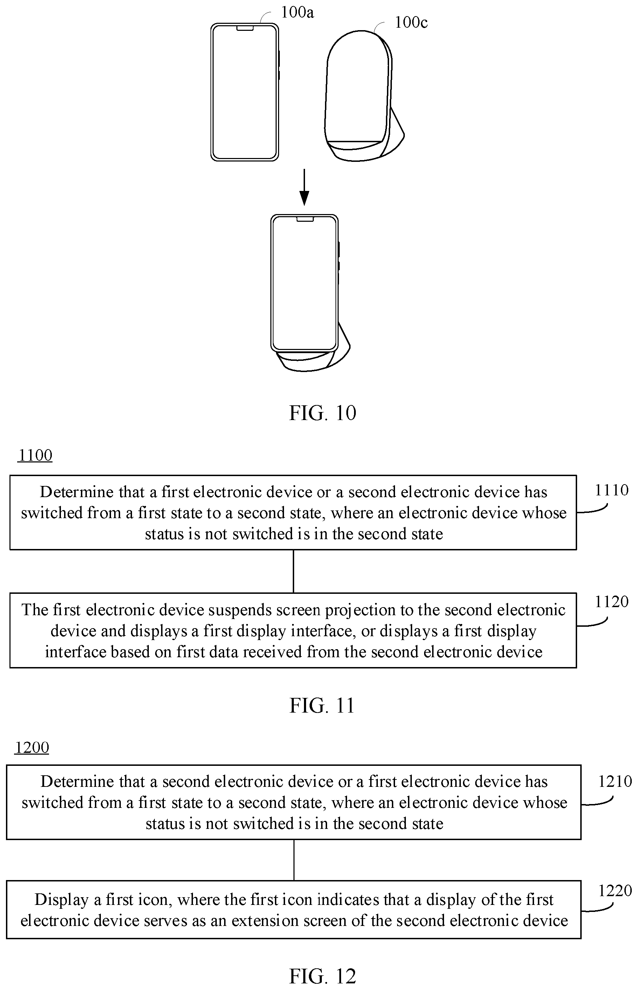

In this embodiment of this application, as shown in FIG. 10, that a mobile phone 100a is placed on a holder 100c of the mobile phone may be understood as that the mobile phone 100a is in a holder state. It should be understood that, when the mobile phone 100a is located on the holder 100c, a y-axis angle α1 of the mobile phone 100a meets the formula 1.

It should be understood that the electronic device may further obtain an x-axis angle and a z-axis angle by using the IMU.

The normal state of the electronic device may be understood as follows: The y-axis angle α1 of the electronic device does not meet the formula 1, and a variation range of the angle α1 is greater than a second preset value within preset time t.

For example, the second preset value may be 5 or 6.

For example, the electronic device is a mobile phone. When a user holds the mobile phone for use, there is a high probability that the y-axis angle of the electronic device does not meet the formula 1 and an angle variation range of the mobile phone is large. This may be understood as that the electronic device is in the normal state.

In some cases, when the electronic device is placed on a holder, in other words, when the electronic device is in the holder state, the user may accidentally touch the electronic device, or a table shakes, or the like, causing a slight change in the y-axis angle of the electronic device. In this case, the electronic device may detect the change in the y-axis angle, and therefore incorrectly determine that the electronic device has changed from the holder state to the normal state, and suspend screen projection. However, in this case, the user does not expect the electronic device to suspend screen projection. Consequently, user experience is affected. To enable the electronic device to smoothly transit between the holder state and the normal state and avoid misjudgment of the electronic device, the intermediate state of the electronic device is introduced in this application.

The intermediate state may be understood as follows: A variation range of the y-axis angle α1 of the electronic device is greater than or equal to a first preset value and less than or equal to a second preset value within preset time t.

For example, the preset time t is 1s, the first preset value is 0.03, and the second preset value is 5. To be specific, when a variation of the y-axis angle of the electronic device within 1s ranges from 0.03 to 5, the electronic device is in the intermediate state.

In this embodiment of this application, when the electronic device changes from a previous state to the intermediate state, the electronic device remains in a current state.

In an example, the electronic device is in the holder state. When the electronic device detects, by using the IMU, that a variation of the y-axis angle within 1s ranges from 0.03 to 5, it can be determined that the electronic device has changed to the intermediate state. In this case, the electronic device remains in a state in the holder state. For example, as shown in FIG. 4(b), the mobile phone 300a is in a holder state. When the mobile phone 300a detects that the mobile phone changes to an intermediate state, the mobile phone may remain in a current state.

In another example, the electronic device is in the normal state. When the electronic device detects, by using the IMU, that a variation of the y-axis angle within 1s ranges from 0.03 to 5, it can be determined that the electronic device has changed to the intermediate state. In this case, the electronic device remains in a state in the normal state. For example, as shown in FIG. 4(b), the mobile phone 300a is in a normal state. When the mobile phone 300a detects that the mobile phone changes to an intermediate state, the mobile phone may remain in a current state.

In some other examples, when the electronic device is in a landscape state, during determining whether a status of the electronic device has changed, the y-axis angle may be replaced with a z-axis angle. To be specific, the z-axis angle β1 is obtained to determine the status of the electronic device.

In this embodiment of this application, the intermediate state is set, so that the electronic device can smoothly switch between the holder state and the normal state, to avoid a case that the electronic device switches a screen projection status due to accidental touch or shaking. This can provide misoperation tolerance for the user and therefore improve user experience.

In FIG. 11 and FIG. 12, an example in which a first electronic device performs screen projection to a second electronic device is used for description. For example, the first electronic device may be the mobile phone in the foregoing descriptions, and the second electronic device may be the tablet computer in the foregoing descriptions.

FIG. 11 is a schematic flowchart of a window switching method according to an embodiment of this application. As shown in FIG. 11, the method 1100 may be applied to a first electronic device. The first electronic device is in a scenario of performing screen projection to a second electronic device. A first display interface displayed on the second electronic device is an interface projected by the first electronic device to the second electronic device. The method 1100 may include step 1110 and step 1120.

It should be understood that the first display interface may be a display interface corresponding to a screen projection window projected by the first electronic device to the second electronic device.

1110: The first electronic device determines that the first electronic device or the second electronic device has switched from a first state to a second state, where an electronic device whose status is not switched is in the second state.

It should be understood that, before step 1110, the first electronic device may establish a screen projection connection to the second electronic device. For example, the first electronic device may establish a connection relationship with the second electronic device in a wireless or wired manner. A specific manner of establishing the connection relationship is not limited in this embodiment of this application.

The first state may be the normal state in the foregoing descriptions, and the second state may be the holder state in the foregoing descriptions.

Step 1110 may be understood as follows: One of the first electronic device and the second electronic device is in a holder state, and the other has switched from a normal state to a holder state.

1120: The first electronic device suspends screen projection to the second electronic device, and the first electronic device displays the first display interface; or the first electronic device displays the first display interface based on first data received from the second electronic device.

For example, as shown in FIG. 4(a) and FIG. 4(b), the first electronic device may be a mobile phone, and the second electronic device may be a tablet computer. When the mobile phone determines that one of the tablet computer and the mobile phone is in a holder state and the other has switched from a normal state to a holder state, the mobile phone may display a display interface 310 projected to the tablet computer and suspend screen projection to the tablet computer, or the mobile phone displays a first display interface based on data received from the tablet computer.

In this case, a mouse or a cursor on the tablet computer may be moved to the mobile phone, and a user may control the mobile phone by using the mouse. In other words, the mobile phone may serve as an extension screen of the tablet computer in this case.

It should be understood that the first data may be data projected by the first electronic device to the second electronic device, for example, may be a display interface or a video stream. In this case, when a status of an electronic device changes, the second electronic device uses a display of the first electronic device as an extension screen, and the second electronic device displays, on the first electronic device, a display interface formed based on the first data, so that the screen projection window can be conveniently switched onto the first electronic device for display. In this way, when the screen projection window is switched back onto the second electronic device, screen projection data does not need to be reloaded because screen projection is not interrupted, so that a delay can be reduced.

For example, when the tablet computer detects that the user taps a button of a screen extension icon, the tablet computer may switch the screen projection window back onto the tablet computer for display. In this case, screen projection data does not need to be reloaded because screen projection is not interrupted, so that a delay can be reduced.

In this embodiment of this application, after the first electronic device performs screen projection to the second electronic device, when the first electronic device determines that the first electronic device or the second electronic device has switched from the first state to the second state (for example, from a normal state to a holder state), an electronic device whose status is not switched is also in the second state. In this case, the first electronic device may automatically suspend screen projection to the second electronic device and display the first display interface projected to the second electronic device. To be specific, the display of the first electronic device may visually serve as an extension screen of the second electronic device. In this technical solution, screen projection may be automatically suspended when a status of an electronic device changes, to avoid a manual operation of the user. In addition, the display of the first electronic device may serve as an extension screen of the second electronic device, so that wider visual effect is provided for the user, and user experience is improved. Further, the first electronic device suspends screen projection, so that power consumption and bandwidth can be reduced.

In some embodiments, before the first electronic device displays the first display interface and suspends screen projection to the second electronic device, the method 1100 may further include:
determining whether the display of the first electronic device is turned on; and
turning on the display if determining that the display is not turned on.

For example, as shown in FIG. 5(a) and FIG. 5(b), when the mobile phone determines that one of the tablet computer and the mobile phone is in a holder state and the other has switched from a normal state to a holder state, the mobile phone may first determine whether a display of the mobile phone is turned on. If the display is not turned on, in other words, the mobile phone is in a screen-off state, the display may be turned on to display the display interface 420.

In this technical solution, a display may be turned on when needed, so that power consumption of an electronic device can be reduced.

In some embodiments, if the first electronic device determines that the first electronic device has switched from the first state to the second state, the method 1100 may further include:
sending first indication information to the second electronic device, where the first indication information indicates that the first electronic device has switched from the first state to the second state.

For example, the mobile phone may determine, by using an IMU or a sensor of the mobile phone, whether the mobile phone has switched from a normal state to a holder state.

In this embodiment of this application, when the first electronic device determines that a status of the first electronic device changes, the first electronic device sends indication information for the status change to the second electronic device, so that the second electronic device can perform a switching policy.

In some embodiments, that the first electronic device determines that the second electronic device has switched from a first state to a second state includes:
receiving second indication information sent by the second electronic device; and
when the second indication information indicates that the second electronic device has switched from the first state to the second state, determining that the second electronic device has switched from the first state to the second state.

In this embodiment of this application, when the tablet computer has switched from a first state to a second state, the tablet computer may send second indication information for the state change to the mobile phone. After receiving the second indication information, the mobile phone may determine that a status of the tablet computer has changed, and therefore perform a corresponding operation.

In some embodiments, the first state and/or the second state are/is a physical form of an electronic device.

For example, that the first state or the second state is a physical form of an electronic device may be understood as that the first state or the second state is a posture of the electronic device. For example, the electronic device is placed on a desktop, or is placed on an object at a specific angle, or is held in a hand of the user for use.

In some embodiments, the second state is a holder state, and the holder state indicates that the electronic device is in a stable state, or the holder state is a state in which the electronic device is placed on a holder; and
the first state is a normal state, and the normal state indicates that the electronic device is in an unstable state, or the normal state is a state in which the electronic device is not placed on the holder.

It can be understood that the holder state may indicate that the electronic device is in a stable state. For example, the electronic device is placed in a fixed posture, or is placed on another object at a specific angle, or the electronic device is in a state of being placed on the holder. The normal state may indicate that the electronic device is in an unstable state. For example, the electronic device is held in a hand of the user for use, and does not have a fixed posture. In this case, a posture of the electronic device is in an unstable state, or the electronic device is in a state of not being placed on the holder.

In some embodiments, in the second state, an angle of the first electronic device in a first direction is greater than a first preset angle and is less than or equal to a second preset angle, and a variation range of the angle is less than a first preset value within preset time; and in the first state, the angle is less than or equal to the first preset angle or is greater than the second preset angle, and a variation range of the angle is greater than a second preset value within the preset time.

It should be understood that the second state may be a holder state, and the first state may be a normal state. For the holder state and the normal state, refer to the foregoing related descriptions. For brevity, details are not described again.

In some embodiments, the method 1100 may further include:
The first electronic device determines that a variation range of the angle is greater than or equal to the first preset value and is less than or equal to the second preset value within the preset time; and
the first electronic device determines that the first electronic device is in a third state, and the first electronic device continues to display the first display interface in the third state.

For example, as shown in FIG. 8, the first state may be the normal state, the second state may be the holder state, and the third state may be an intermediate state.

In this embodiment of this application, the intermediate state is introduced, so that an electronic device can smoothly switch between the holder state and the normal state, to avoid a case that the electronic device switches a screen projection status due to accidental touch or shaking. This can provide misoperation tolerance for the user and therefore improve user experience.

In some embodiments, a cursor on the second electronic device may be moved to the display of the first electronic device.

In this embodiment of this application, after the first electronic device suspends screen projection to the second electronic device, the first electronic device may serve as an extension screen of the second electronic device. In this case, the user may control the first electronic device by using a mouse.

In some embodiments, the method 1100 may further include:
The first electronic device determines that the second electronic device has switched from the second state to the first state; and
the first electronic device turns off the display, and continues to perform screen projection to the second electronic device.

In an example, as shown in FIG. 4(a) and FIG. 4(b), when the mobile phone determines that the tablet computer has switched from a holder state back to a normal state, the mobile phone may turn off a display, and resume screen projection to the tablet computer, and the tablet computer displays the screen projection window 320.

In another example, as shown in FIG. 5(a) and FIG. 5(b), when the mobile phone determines that the tablet computer has switched from a holder state back to a normal state, the mobile phone may turn off the display, and resume screen projection to the tablet computer, and the tablet computer displays the screen projection icon 430. In this case, the screen projection window is displayed on the tablet computer in a minimized form.

In this embodiment of this application, when it is determined that the second electronic device has switched from the second state back to the first state, the first electronic device may automatically resume screen projection to the second electronic device, without a manual operation of the user, so that the screen projection window can be displayed on the second electronic device. In addition, the first electronic device turns off a screen, so that power consumption can be further reduced.

In some embodiments, the method 1100 may further include:
The first electronic device determines that the first electronic device has switched from the second state to the first state; and
the first electronic device continues to display the first display interface, and continues to perform screen projection to the second electronic device.

In this embodiment of this application, when it is determined that the first electronic device has switched from the second state back to the first state, screen projection to the second electronic device may be automatically resumed, so that the screen projection window can be redisplayed on the second electronic device. In addition, the first electronic device continues to display the first display interface, without affecting use of the first electronic device by the user.

In some embodiments, before the first electronic device turns off the display, the method 1100 may further include:
The first electronic device determines that no image of a user is obtained when a camera is turned on.

In this embodiment of this application, when the first electronic device turns on the camera and obtains no image of a user, the first electronic device may turn off a screen to reduce power consumption.

In some embodiments, that the first electronic device suspends screen projection to the second electronic device and displays the first display interface, or the first electronic device displays the first display interface based on first screen projection data received from the second electronic device includes:
When it is determined that a distance between the first electronic device and the second electronic device is less than or equal to a preset distance, the first electronic device suspends screen projection to the second electronic device and displays the first display interface, or the first electronic device displays the first display interface based on the first screen projection data received from the second electronic device.

In this embodiment of this application, the distance between the first electronic device and the second electronic device should be within a preset distance range, to avoid a problem for the user in a case in which a screen projection status still switches when the user holds the first electronic device far away from the second electronic device.

FIG. 12 is a schematic flowchart of another window switching method according to an embodiment of this application. As shown in FIG. 12, the method 1200 may be applied to a second electronic device. The second electronic device is in a scenario in which a first electronic device performs screen projection to the second electronic device. The method 1200 may include step 1210 and step 1220.

1210: The second electronic device determines that the second electronic device or the first electronic device has switched from a first state to a second state, where an electronic device whose status is not switched is in the second state.

In step 1210, the first electronic device may perform screen projection to the second electronic device, and the second electronic device is in a projected-to state.

The first state may be the normal state in the foregoing descriptions, and the second state may be the holder state in the foregoing descriptions.

Step 1210 may be understood as follows: One of the first electronic device and the second electronic device is in a holder state, and the other has switched from a normal state to a holder state.

1220: The second electronic device displays a first icon, where the first icon indicates that a display of the first electronic device serves as an extension screen of the second electronic device.

For example, the first icon may be a screen extension icon. The screen extension icon may also be referred to as an extension icon, an expansion icon, or the like.

In an example, as shown in FIG. 4(a) and FIG. 4(b), when the tablet computer determines that a status of the tablet computer or the mobile phone has switched from a normal state to a holder state, the tablet computer may display the screen extension icon 330. It should be understood that the screen extension icon may alternatively be an icon in another form. This is not limited in this application.

In some possible implementations, when the mobile phone is located on the left of the tablet computer, the first icon may be located on the left of a display interface; or when the mobile phone is located on the left of the tablet computer, the first icon may be located on the left of a display interface.

In this embodiment of this application, after the first electronic device performs screen projection to the second electronic device, when the second electronic device determines that the first electronic device or the second electronic device has switched from the first state to the second state (for example, from a normal state to a holder state), an electronic device whose status is not switched is also in the second state. In this case, the second electronic device may display the first icon indicating that the display of the first electronic device serves as an extension screen of the second electronic device. In this case, the first electronic device suspends screen projection, a screen projection window on the second electronic device is closed, and the second electronic device only needs to display the first icon. In addition, the first electronic device may serve as an extension screen of the second electronic device, to provide wider visual effect for a user and improve user experience.

In some embodiments, that the second electronic device displays a first icon includes:
If a first display interface of the first electronic device is displayed on a display interface of the second electronic device in a form of a screen projection window, the second electronic device closes the first display interface, and displays the first icon; or
if a first display interface of the first electronic device is displayed on a display interface of the second electronic device in a form of a screen projection icon, the second electronic device changes the screen projection icon to the first icon.

In some examples, as shown in FIG. 4(a) and FIG. 4(b), a display interface of the mobile phone is displayed on the display interface 340 of the tablet computer in a form of the screen projection window 320. When the tablet computer determines that a status of the tablet computer or the mobile phone changes, the tablet computer closes the screen projection window 320, and displays the screen extension icon 330.

In another example, as shown in FIG. 5(a) and FIG. 5(b), a display interface of the mobile phone is displayed on the display interface 450 of the tablet computer in a form of the screen projection icon 430, to be specific, a screen projection window of the mobile phone is displayed on the tablet computer in a minimized form. When the tablet computer determines that a status of the tablet computer or the mobile phone changes, the tablet computer changes the screen projection icon 430 to the screen extension icon 440.

In this embodiment of this application, when the second electronic device displays the first icon, if a display interface of the first electronic device is displayed on the second electronic device in a form of a screen projection window, the second electronic device may close the screen projection window and display the first icon; or if a display interface of the first electronic device is already displayed on the second electronic device in a minimized form, the second electronic device may change a screen projection icon displayed in a minimized form to the first icon. In this technical solution, the second electronic device can finally display the first icon to notify the user that a current mode is a screen extension mode.

In some other embodiments, after the second electronic device detects an operation of tapping or clicking, by using a mouse, the first icon by the user, the first display interface may be redisplayed on the second electronic device in a form of a screen projection window.

In some embodiments, that the second electronic device determines that the first electronic device has switched from a first state to a second state includes:
receiving first indication information sent by the first electronic device; and
when the first indication information indicates that the first electronic device has switched from the first state to the second state, determining that the first electronic device has switched from the first state to the second state.

In this embodiment of this application, when the first electronic device detects that a status of the first electronic device has switched from the first state to the second state, the first electronic device may send indication information for the status change to the second electronic device.

In this embodiment of this application, the second electronic device may further receive indication information that is sent by the first electronic device and that indicates that a status of the first electronic device changes, to determine that the status of the first electronic device changes, so that the second electronic device can perform a window switching policy.

In some embodiments, if the second electronic device determines that the second electronic device has switched from the first state to the second state, the method 1200 may further include:
sending second indication information to the first electronic device, where the second indication information indicates that the second electronic device has switched from the first state to the second state.

In this embodiment of this application, when the second electronic device determines that a status of the second electronic device changes, the second electronic device sends indication information for the status change to the first electronic device, so that the first electronic device can perform a switching policy.

In some embodiments, the method 1200 may further include:
The second electronic device sends first screen projection data to the first electronic device, where the first data is used to control the first electronic device to display the first display interface, and the first data is data projected by the first electronic device to the second electronic device.

In this embodiment of this application, the screen projection window can be conveniently switched onto the first electronic device for display. In this way, when the screen projection window is switched back onto the second electronic device, screen projection data does not need to be reloaded because screen projection is not interrupted, so that a delay can be reduced.

For example, when the tablet computer detects that the user taps a button of a screen extension icon, the tablet computer may switch the screen projection window back onto the tablet computer for display. In this case, screen projection data does not need to be reloaded because screen projection is not interrupted, so that a delay can be reduced.

In some embodiments, the method 1200 may further include:
If the second electronic device determines that the first display interface is displayed on the display interface of the second electronic device in a full-screen form, when the second electronic device determines that the second electronic device or the first electronic device has switched from the first state to the second state, the second electronic device continues to display the first display interface.

For example, as shown in FIG. 6(a), FIG. 6(b), and FIG. 6(c), when a display interface of the mobile phone is displayed on the tablet computer in a full-screen form, the tablet computer may continue to display the display interface of the mobile phone when a status of the tablet computer or the mobile phone changes.

In this embodiment of this application, when it is determined that one of the first electronic device or the second electronic device changes from the normal state to the holder state, the second electronic device may continue to display a screen projection window in a maximized or full-screen form, without affecting immersive experience of the user.

In some embodiments, the first state and/or the second state are/is a physical form of an electronic device.

In some embodiments, the second state is a holder state, and the holder state indicates that the electronic device is in a stable state, or the holder state is a state in which the electronic device is placed on a holder; and
the first state is a normal state, and the normal state indicates that the electronic device is in an unstable state, or the normal state is a state in which the electronic device is not placed on the holder.

In some embodiments, in the second state, an angle of the second electronic device in a first direction is greater than a first preset angle and is less than or equal to a second preset angle, and a variation range of the angle is less than a first preset value within preset time; and
in the first state, the angle is less than or equal to the first preset angle or is greater than the second preset angle, and a variation range of the angle is greater than a second preset value within the preset time.

It should be understood that the second state may be a holder state, and the first state may be a normal state. For the holder state and the normal state, refer to the foregoing related descriptions.

In some embodiments, the method 1200 may further include:
The second electronic device determines that a variation range of the angle is greater than or equal to the first preset value and is less than or equal to the second preset value within the preset time; and
the second electronic device determines that the second electronic device is in a third state, and the second electronic device continues to display the first icon in the third state.

For example, as shown in FIG. 8, the first state may be the normal state, the second state may be the holder state, and the third state may be an intermediate state.

In this embodiment of this application, the intermediate state is introduced, so that an electronic device can smoothly switch between the holder state and the normal state, to avoid a case that the electronic device switches a screen projection status due to accidental touch or shaking. This can provide misoperation tolerance for the user and therefore improve user experience.

In some embodiments, a cursor on the second electronic device may be moved to the display of the first electronic device.

In this embodiment of this application, after the first electronic device suspends screen projection, the first electronic device may serve as an extension screen of the second electronic device. In this case, the user may control the first electronic device by using a mouse.

In some embodiments, the method 1200 further includes:
The second electronic device determines that the second electronic device or the first electronic device has switched from the second state to the first state; and
the second electronic device closes the first icon and displays the first display interface in a form of a screen projection window, or the second electronic device changes the first icon to the screen projection icon.

In an example, as shown in FIG. 4(a) and FIG. 4(b), when the tablet computer determines that the tablet computer or the mobile phone has switched from a holder state to a normal state, the tablet computer may not display the screen extension icon, and redisplay the screen projection window 320 on a display interface.

In another example, as shown in FIG. 5(a) and FIG. 5(b), when the tablet computer determines that the tablet computer or the mobile phone has switched from a holder state to a normal state, the tablet computer may change the screen extension icon back to the screen projection icon.

In this embodiment of this application, when it is determined that the first electronic device or the second electronic device has switched from the holder state back to the normal state, the first electronic device may automatically resume screen projection to the second electronic device. To be specific, the screen projection window is redisplayed on the second electronic device. **In** this case, the second electronic device may restore the screen projection window to an original state. This helps improve user experience.

In some embodiments, the method 1200 may further include:
The second electronic device turns on a camera and determines whether an image of a user is obtained; and
if no image is obtained, the second electronic device turns off a screen.

In this embodiment of this application, when one of the first electronic device and the second electronic device has switched from the holder state to the normal state, the second electronic device may turn on the camera to determine whether an image of a user is obtained, and may turn off the screen when no image of a user is obtained, to reduce power consumption.

In some embodiments, that the second electronic device displays a first icon includes:
The second electronic device displays the first icon when it is determined that a distance between the second electronic device and the first electronic device is less than or equal to a preset distance.

In this embodiment of this application, the distance between the first electronic device and the second electronic device should be within a preset distance range, to avoid a problem for the user in a case in which a screen projection status still switches when the user holds the first electronic device far away from the second electronic device.

An embodiment of this application further provides a system. The system includes a first electronic device and a second electronic device. The first electronic device and the second electronic device have a screen projection relationship.

The first electronic device is configured to: when it is determined that the first electronic device or the second electronic device has switched from a first state to a second state, suspend screen projection to the second electronic device and display a first display interface, or display, by the first electronic device, a first display interface based on first data received from the second electronic device, where the first display interface is a display interface projected by the first electronic device to the second electronic device, and an electronic device whose status is not switched is in the second state.

The second electronic device is configured to display a first icon when it is determined that the first electronic device or the second electronic device has switched from the first state to the second state, where the first icon indicates that a display of the first electronic device serves as an extension screen of the second electronic device.

In this embodiment of this application, after the first electronic device performs screen projection to the second electronic device, when it is determined that the first electronic device or the second electronic device has switched from the first state to the second state, the first electronic device may display the first display interface and suspend screen projection to the second electronic device; and the second electronic device displays the first icon, where the first icon indicates that the display of the first electronic device serves as an extension screen of the second electronic device. In this technical solution, when it is detected that a status of an electronic device changes, screen projection may be automatically suspended, and a display of a projected-from electronic device may serve as an extension screen of another projected-to electronic device, without a manual operation of a user, so that user experience can be improved.

In this embodiment of this application, when a status of an electronic device changes, the first electronic device may continue to perform screen projection to the second electronic device, receive the first data sent by the second electronic device, and display the first display interface based on the first data, so that a screen projection window can be conveniently switched onto the first electronic device for display. In this way, when the screen projection window is switched back onto the second electronic device, screen projection data does not need to be reloaded because screen projection is not interrupted, so that a delay can be reduced.

An embodiment of this application further provides an electronic device, including one or more processors and one or more memories. The one or more memories store one or more computer programs. The one or more computer programs include instructions. When the instructions are executed by the one or more processors, the window switching method according to any one of the foregoing possible implementations is performed.

An embodiment of this application further provides a chip. The chip includes a processor and a communication interface. The communication interface is configured to receive a signal and transmit the signal to the processor. The processor processes the signal, so that the window switching method according to any one of the foregoing possible implementations is performed.

An embodiment further provides a computer-readable storage medium. The computer-readable storage medium stores computer instructions. When the computer instructions are run on an electronic device, the electronic device is enabled to perform the foregoing related method steps, to implement the window switching method in the foregoing embodiments.

An embodiment further provides a computer program product. When the computer program product is run on a computer, the computer is enabled to perform the foregoing related steps, to implement the window switching method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the window switching method in the foregoing method embodiments.

The electronic device, the computer-readable storage medium, the computer program product, or the chip provided in embodiments is configured to perform the corresponding method provided above. Therefore, for benefits that can be achieved, refer to the benefits in the corresponding method provided above. Details are not described herein again.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

It can be clearly understood by a person skilled in the art that, for ease and brevity of description, for detailed working processes of the foregoing system, apparatus, and unit, reference may be made to corresponding processes in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components shown as units may or may not be physical units, to be specific, may be located in one place, or may be distributed on a plurality of network units. Some or all of the units may be selected according to actual requirements to achieve objectives of solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods in embodiments of this application. The storage medium includes any medium that can store program code, for example, a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A window switching method, wherein the method is applied to a first electronic device, the first electronic device is in a scenario of performing screen projection to a second electronic device, and a first display interface displayed on the second electronic device is an interface projected by the first electronic device to the second electronic device; and the method comprises:
determining, by the first electronic device, that the first electronic device or the second electronic device has switched from a first state to a second state, wherein an electronic device whose status is not switched is in the second state; and
suspending, by the first electronic device, screen projection to the second electronic device, and displaying, by the first electronic device, the first display interface, or displaying, by the first electronic device, the first display interface based on first data received from the second electronic device.

2. The method according to claim 1, wherein before the displaying, by the first electronic device, the first display interface and suspending screen projection to the second electronic device, the method further comprises:
determining whether a display of the first electronic device is turned on; and
turning on the display if determining that the display is not turned on.

3. The method according to claim 1 or 2, wherein if the first electronic device determines that the first electronic device has switched from the first state to the second state, the method further comprises:
sending first indication information to the second electronic device, wherein the first indication information indicates that the first electronic device has switched from the first state to the second state.

4. The method according to claim 1 or 2, wherein the determining, by the first electronic device, that the second electronic device has switched from a first state to a second state comprises:
receiving second indication information sent by the second electronic device; and
when the second indication information indicates that the second electronic device has switched from the first state to the second state, determining that the second electronic device has switched from the first state to the second state.

5. The method according to any one of claims 1 to 4, wherein the first state and/or the second state are/is a physical form of an electronic device.

6. The method according to claim 5, wherein the second state is a holder state, and the holder state indicates that the electronic device is in a stable state, or the holder state is a state in which the electronic device is placed on a holder; and
the first state is a normal state, and the normal state indicates that the electronic device is in an unstable state, or the normal state is a state in which the electronic device is not placed on the holder.

7. The method according to claim 6, wherein in the second state, an angle of the first electronic device in a first direction is greater than a first preset angle and is less than or equal to a second preset angle, and a variation range of the angle is less than a first preset value within preset time; and
in the first state, the angle is less than or equal to the first preset angle or is greater than the second preset angle, and a variation range of the angle is greater than a second preset value within the preset time.

8. The method according to claim 7, wherein the method further comprises:
determining, by the first electronic device, that a variation range of the angle is greater than or equal to the first preset value and is less than or equal to the second preset value within the preset time; and
determining, by the first electronic device, that the first electronic device is in a third state, and continuing, by the first electronic device, to display the first display interface in the third state.

9. The method according to any one of claims 1 to 7, wherein the method further comprises:
determining, by the first electronic device, that the second electronic device has switched from the second state to the first state; and
turning off, by the first electronic device, the display, and continuing to perform screen projection to the second electronic device.

10. The method according to any one of claims 1 to 7, wherein the method further comprises:
determining, by the first electronic device, that the first electronic device has switched from the second state to the first state; and
continuing, by the first electronic device, to display the first display interface, and continuing to perform screen projection to the second electronic device.

11. The method according to claim 9, wherein before the turning off, by the first electronic device, the display, the method further comprises:
determining, by the first electronic device, that no image of a user is obtained when a camera is turned on.

12. The method according to any one of claims 1 to 11, wherein the suspending, by the first electronic device, screen projection to the second electronic device and displaying the first display interface, or displaying, by the first electronic device, the first display interface based on first data received from the second electronic device comprises:
when it is determined that a distance between the first electronic device and the second electronic device is less than or equal to a preset distance, suspending, by the first electronic device, screen projection to the second electronic device and displaying the first display interface, or displaying, by the first electronic device, the first display interface based on the first data received from the second electronic device.

13. A window switching method, wherein the method is applied to a second electronic device, the second electronic device is in a scenario in which a first electronic device performs screen projection to the second electronic device, and the method comprises:
determining, by the second electronic device, that the second electronic device or the first electronic device has switched from a first state to a second state, wherein an electronic device whose status is not switched is in the second state; and
displaying, by the second electronic device, a first icon, wherein the first icon indicates that a display of the first electronic device serves as an extension screen of the second electronic device.

14. The method according to claim 13, wherein the displaying, by the second electronic device, a first icon comprises:
if a first display interface of the first electronic device is displayed on a display interface of the second electronic device in a form of a screen projection window, closing, by the second electronic device, the first display interface, and displaying the first icon; or
if a first display interface of the first electronic device is displayed on a display interface of the second electronic device in a form of a screen projection icon, changing, by the second electronic device, the screen projection icon to the first icon.

15. The method according to claim 13 or 14, wherein the determining, by the second electronic device, that the first electronic device has switched from a first state to a second state comprises:
receiving first indication information sent by the first electronic device; and
when the first indication information indicates that the first electronic device has switched from the first state to the second state, determining that the first electronic device has switched from the first state to the second state.

16. The method according to claim 13 or 14, wherein if the second electronic device determines that the second electronic device has switched from the first state to the second state, the method further comprises:
sending second indication information to the first electronic device, wherein the second indication information indicates that the second electronic device has switched from the first state to the second state.

17. The method according to any one of claims 13 to 16, wherein the method further comprises:
sending, by the second electronic device, first data to the first electronic device, wherein the first data is used to control the first electronic device to display the first display interface, and the first data is data projected by the first electronic device to the second electronic device.

18. The method according to claim 15, wherein the method further comprises:
if the second electronic device determines that the first display interface is displayed on the display interface of the second electronic device in a full-screen form, when the second electronic device determines that the second electronic device or the first electronic device has switched from the first state to the second state, continuing, by the second electronic device, to display the first display interface.

19. The method according to any one of claims 13 to 18, wherein the first state and/or the second state are/is a physical form of an electronic device.

20. The method according to claim 19, wherein the second state is a holder state, and the holder state indicates that the electronic device is in a stable state, or the holder state is a state in which the electronic device is placed on a holder; and
the first state is a normal state, and the normal state indicates that the electronic device is in an unstable state, or the normal state is a state in which the electronic device is not placed on the holder.

21. The method according to claim 20, wherein in the second state, an angle of the second electronic device in a first direction is greater than a first preset angle and is less than or equal to a second preset angle, and a variation range of the angle is less than a first preset value within preset time; and
in the first state, the angle is less than or equal to the first preset angle or is greater than the second preset angle, and a variation range of the angle is greater than a second preset value within the preset time.

22. The method according to claim 21, wherein the method further comprises:
determining, by the second electronic device, that a variation range of the angle is greater than or equal to the first preset value and is less than or equal to the second preset value within the preset time; and
determining, by the second electronic device, that the second electronic device is in a third state, and continuing, by the second electronic device, to display the first icon in the third state.

23. The method according to any one of claims 13 to 22, wherein a cursor on the second electronic device may be moved to the display of the first electronic device.

24. The method according to any one of claims 13 to 22, wherein the method further comprises:
determining, by the second electronic device, that the second electronic device or the first electronic device has switched from the second state to the first state; and
closing, by the second electronic device, the first icon and displaying the first display interface in a form of a screen projection window, or changing, by the second electronic device, the first icon to the screen projection icon.

25. The method according to claim 24, wherein the method further comprises:
turning on, by the second electronic device, a camera and determining whether an image of a user is obtained; and
if no image is obtained, turning off, by the second electronic device, a screen.

26. The method according to any one of claims 13 to 25, wherein the displaying, by the second electronic device, a first icon comprises:
displaying, by the second electronic device, the first icon when it is determined that a distance between the second electronic device and the first electronic device is less than or equal to a preset distance.

27. An electronic device, comprising one or more processors and one or more memories, wherein the one or more memories store one or more computer programs, the one or more computer programs comprise instructions, and when the instructions are executed by the one or more processors, the window switching method according to any one of claims 1 to 12 is performed.

28. An electronic device, comprising one or more processors and one or more memories, wherein the one or more memories store one or more computer programs, the one or more computer programs comprise instructions, and when the instructions are executed by the one or more processors, the window switching method according to any one of claims 13 to 26 is performed.

29. A system, comprising the electronic device according to claim 27 and the electronic device according to claim 28.

30. A computer-readable storage medium, wherein the computer-readable storage medium stores computer instructions, and when the computer instructions are run on a computer, the window switching method according to any one of claims 1 to 26 is performed.
